# EUROPÄISCHE PATENTSCHRIFT

(11) **EP 3 037 785 B1**
(45) Veröffentlichungstag und Bekanntmachung des Hinweises auf die Patenterteilung: **09.08.2023**
(21) Anmeldenummer: 15166405.9
(22) Anmeldetag: 05.05.2015
(51) Int. Cl.: G01C 21/36

(54) **INFORMATIONSWIEDERGABESYSTEM, FAHRZEUG, VERFAHREN UND COMPUTERPROGRAMM ZUR BEREITSTELLUNG EINES VIDEO- UND STEUERSIGNALS**
INFORMATION REPRODUCTION SYSTEM, VEHICLE, METHOD AND COMPUTER PROGRAM FOR PROVIDING A VIDEO AND CONTROL SIGNAL
SYSTÈME DE TRANSMISSION D'INFORMATIONS, VÉHICULE, PROCÉDÉ ET PROGRAMME D'ORDINATEUR DESTINÉS À LA PRÉPARATION D'UN SIGNAL DE COMMANDE ET VIDÉO

(30) Priorität: 17.12.2014 DE 102014226238
(43) Veröffentlichungstag der Anmeldung: 29.06.2016
(73) Patentinhaber: Volkswagen Aktiengesellschaft, 38440 Wolfsburg (DE)
(72) Erfinder: Jun, Mi-Ran, 10965 Berlin (DE)

(56) Entgegenhaltungen:
- EP-A1- 2 458 467
- WO-A1-2012/038742
- JP-A- 2013 029 478
- US-A1- 2008 062 141
- US-A1- 2012 131 495
- US-A1- 2014 013 263
- US-A1- 2014 245 232
- GaiaGPSsupport: "Layered Maps", YouTube , 17. September 2012 (2012-09-17), XP054976558, Gefunden im Internet: URL:https://www.youtube.com/watch?v=x7Pze8 R-K8A [gefunden am 2016-05-03]
- DAVIAN: "Restoring files from Time Machine backups (Mac OS X 10.5, Mac OS X 10.6)", INTERNET CITATION, 7 May 2010 (2010-05-07), pages 1-3, XP002654915, Retrieved from the Internet: URL:http://www.askdrtech.com/solutions/pos t/Restoring-files-from-Time-Machine-backup s-%28Mac-OS-X-105-Mac-OS-X-106%29.aspx [retrieved on 2011-08-01]

## Beschreibung

Ausführungsbeispiele betreffen ein Informationswiedergabesystem gemäß Anspruch 1, ein Fahrzeug gemäß Anspruch 18, ein Verfahren gemäß Anspruch 19 und ein Programm mit einem Programmcode gemäß Anspruch 20.

Informationswiedergabesysteme nehmen in modernen Fahrzeugen oft eine zentrale Stellung ein. Oft werden viele Funktionen des Fahrzeugs, etwa eine Darstellung von Informationen über das Fahrzeug, eine Wiedergabe von Medien, eine Steuerung von Fahrzeugfunktionen, eine Bereitstellung von Karteninformationen, oder eine Steuerung einer Freisprecheinrichtung über Informationswiedergabesysteme bereitgestellt. Dabei nimmt eine intuitive Bedienbarkeit des Systems und Darstellung der Informationen häufig eine große Rolle ein, da Ablenkungen und weniger intuitive Bedienungen und Darstellungen häufig die Konzentration des Fahrers und damit die Fahrsicherheit beeinträchtigen können.

Navigationsgeräte, beispielsweise für eine Fahrzeugnavigation, stellen häufig nicht nur Karteninformationen und Navigationsinformationen bereit, sondern umfassen häufig auch eine Darstellung von zusätzlichen Informationen. Diese zusätzlichen Informationen können beispielsweise Information über Parkmöglichkeiten, Information über Tankstellen, Information über Gastronomieangebote, oder Information über Geschwindigkeitsbeschränkungen umfassen. Häufig werden solche Informationen zusammen mit der Karteninformation in derselben Betrachtungsebene integriert, um einem Benutzer die örtliche Verfügbarkeit solcher Punkte von Interesse zu signalisieren, was häufig zu einer unübersichtlichen Darstellung führen kann. Dies ist beispielsweise bei dem System, das unter GaiaGPSsupport: "Layered Maps", YouTube (URL:httDs1/www.voutube.com/watch'?v=x7Pze8R-KBA) veröffentlicht wurde, der Fall. Die US 2014/245232 A1 und die US 2014/013263 A1 betreffen ein Informationswiedergabesystem bei dem ein Benutzer sich die einzelnen Stockwerke eines mehrstöckigen Gebäudes in Explosionsdarstellung darstellen lassen kann, um einen Überblick über die Aufteilung der einzelnen Stockwerke zu erhalten. Die JP 2013 029479 A betrifft ein Navigationssystem mit einer einzigen Betrachtungsebene, bei dem die Darstellung des Standorts des Fahrzeugs verbessert wird.

Einige Ausführungsbeispiele können dies beispielsweise durch eine gleichzeitige Darstellung mehrerer Ebenen, die beispielsweise parallel zueinander übereinander angeordnet sind, auf einer Anzeigeeinrichtung mit einer Ebenenauswahl ermöglichen. Das Informationswiedergabesystem stellt auf mehreren dreidimensional dargestellten Anzeigeschichten unterschiedliche Informationen bereit, deren Zusammenhang durch die dreidimensionale Darstellung erfassbar wird. Durch eine Auswahl einer Anzeigeschicht, die dann beispielsweise vom Benutzer aus gesehen als oberste Anzeigeschicht dargestellt wird, können beispielsweise die Eigenschaften und dargestellten Informationen der Anzeigeschicht verändert werden. Ebenso kann beispielsweise die Reihenfolge der Schichten, und damit ihre Sichtbarkeit, verändert werden. Die Manipulation der Ebenen kann dabei beispielsweise über Berührungs- oder Gestensteuerung erfolgen. In einigen Ausführungsbeispiele kann das Informationswiedergabesystem beispielsweise ein Video- oder Steuersignal bereitstellen, so dass auf einer Anzeigeeinrichtung Karteninformation, etwa topographische Information, Straßeninformation und Zusatzinformation, etwa Punkte von Interesse in unterschiedlichen dreidimensional dargestellten Anzeigeschichten dargestellt werden.

Das Informationswiedergabesystem umfasst einen Prozessor, der ausgebildet ist, um ein Videooder Steuersignal zu erzeugen, sodass ein aus der Sicht eines Benutzers mehrschichtiger Anzeigebereich durch eine Anzeigeeinrichtung wiedergebbar ist. Der mehrschichtige Anzeigenbereich umfasst eine Mehrzahl von dreidimensional dargestellten Anzeigeschichten. Unterschiedliche Anzeigeschichten der Mehrzahl von dreidimensional dargestellten Anzeigeschichten stellen unterschiedliche Informationen für den Benutzer bereit, wobei die unterschiedlichen Informationen in unterschiedlichen Gruppen von Informationen umfasst sind, wobei unterschiedliche Anzeigeschichten Informationen aus unterschiedlichen Gruppen für den Benutzer bereitstellen. Das Informationswiedergabesystem umfasst ferner eine Ausgangseinrichtung, die ausgebildet ist, um das Video- oder Steuersignal der Anzeigeeinrichtung bereitzustellen. Die Gruppen umfassen Routeninformation, Straßeninformation, Information über Bauwerke, Information über Topographie, Information über Natur und Information über Punkte von Interesse umfassen, und wobei die unterschiedlichen Informationen einen Zusammenhang aufweisen.

Durch die Nutzung von mehreren dreidimensional dargestellten Anzeigeschichten zur Bereitstellung von unterschiedlichen Informationen kann in Ausführungsbeispielen eine intuitive Darstellung der unterschiedlichen Informationen bereitgestellt werden. Durch die dreidimensionale Darstellung kann etwa eine Zugehörigkeit einer Information zu einer Anzeigeschicht und ein Zusammenhang von Information einer Anzeigeschicht zu Information einer anderen Anzeigeschicht verdeutlicht werden. Durch die Verteilung der Informationen auf mehrere Anzeigeschichten kann beispielsweise eine höhere Informationsdichte erreicht werden. Durch das beschriebene Konzept kann die Benutzungssicherheit eines Informationswiedergabesystems in einem Fahrzeug erhöht werden, da der Benutzer auf einfache und übersichtliche Art und Weise an die von ihm benötigten oder gewünschten Informationen gelangen kann. Dadurch kann sich der Benutzer insgesamt besser auf das Lenken des Fahrzeugs konzentrieren und trotzdem die gewünschten Informationen erhalten.

In zumindest manchen Ausführungsbeispielen können die dreidimensional dargestellten Anzeigeschichten der Mehrzahl von dreidimensional dargestellten Anzeigeschichten im Wesentlichen durch parallel zueinander und übereinander angeordnete Anzeigeebenen dargestellt werden. Durch die Verteilung der Informationen auf mehrere Anzeigeschichten kann beispielsweise eine höhere Informationsdichte erreicht werden, wobei durch die vertikale Verschiebung der parallel zueinander angeordneten Anzeigeebenen ein Zusammenhang von Informationen innerhalb einer Ebene und ein Zusammenhang von Informationen, welche vom Benutzer aus gesehen übereinander angeordnet sind, dargestellt werden kann.

In zumindest einigen Ausführungsbeispielen können sich die dreidimensional dargestellten Anzeigeschichten der Mehrzahl von dreidimensional dargestellten Anzeigeschichten zumindest teilweise überlagern. Durch die zumindest teilweise Überlagerung könnte der benötigte Anzeigebereich verkleinert werden und ein Zusammenhang von Informationen, welche sich auf einer wahrgenommenen gleichen Position auf ihrer jeweiligen Anzeigeschicht dargestellt werden, kann wahrgenommen werden.

In zumindest manchen Ausführungsbeispielen können sich die dreidimensional dargestellten Anzeigeschichten jeweils über mehr als die Hälfte einer Breite der Anzeigeeinrichtung erstrecken. Durch eine großflächige Darstellung könnten beispielsweise viele unterschiedliche Informationen bereitgestellt werden, oder Zusatzinformation zu Informationen in der Mitte des Anzeigebereichs kann dargestellt werden.

In einigen Ausführungsbeispielen können benachbarte dreidimensional dargestellte Anzeigeschichten der Mehrzahl von dreidimensional dargestellten Anzeigeschichten einen vertikalen Abstand von weniger als 1/3 einer Höhe der Anzeigeeinrichtung und mehr als 1/20 der Höhe der Anzeigeeinrichtung zueinander haben. Durch die zumindest teilweise Überlagerung mit einem vertikalen Abstand von weniger als 1/3 der Höhe der Anzeigeeinrichtung und mehr als 1/20 der Höhe der Anzeigeeinrichtung zwischen benachbarten Anzeigeschichten könnte der benötigte Anzeigebereich verkleinert werden und ein Zusammenhang von Informationen, welche sich auf einer wahrgenommenen gleichen Position auf ihrer jeweiligen Anzeigeschicht dargestellt werden, kann wahrgenommen werden.

In manchen Ausführungsbeispielen kann eine dreidimensional dargestellte Anzeigeschicht der Mehrzahl von dreidimensional dargestellten Anzeigeschichten einer Darstellung aus einem Blickwinkel zwischen 10° und 80° über einer Ebene entsprechen. Die Darstellung aus einem Blickwinkel zwischen 10° und 80° über einer Ebene kann beispielsweise ein intuitives Erfassen der Information ermöglichen, da der Blickwinkel beispielsweise dem Blickwinkel beim Lesen einer Karte entsprechen könnte, oder weil Benutzer der Informationswiedergabesystem eine Darstellung der Information, etwa der Karteninformation, aus anderen Medien, etwa Fahrzeugsimulationen, kennen können.

In zumindest manchen Ausführungsbeispielen kann das Informationswiedergabesystem ferner eine Eingangsschnittstelle umfassen. Die Eingangsschnittstelle kann ausgebildet sein, um ein Eingabesignal zu empfangen. Das Eingabesignal kann beispielsweise Information über eine Position einer Berührung der Anzeigeeinrichtung, Annäherung zu der Anzeigeeinrichtung oder eine Eingabe über eine Eingabeeinrichtung umfassen. Der Prozessor kann ausgebildet sein, um basierend auf dem Eingabesignal eine Auswahl bezüglich des mehrschichtigen Anzeigenbereichs zu erfassen. Durch Erfassung der Auswahl ist beispielsweise eine Bedienung des Informationswiedergabesystems möglich, beispielsweise um dargestellte Information auszuwählen oder zu manipulieren. Durch die Nutzung einer Position einer Berührung, Annäherung der Anzeigeeinrichtung oder Eingabe über die Eingabeeinrichtung könnte eine Mehrzahl von Eingabemöglichkeiten bereitstehen, die beispielsweise für verschiedene Funktionalitäten genutzt werden kann.

In einigen Ausführungsbeispielen kann der Prozessor ausgebildet sein, um die Reihenfolge der Anzeigeschichten des mehrschichtigen Anzeigenbereichs basierend auf der erfassten Auswahl zu bestimmen. Durch die Bestimmung der Reihenfolge könnte ein Benutzer des Informationswiedergabesystems beispielsweise eine Priorisierung der dargestellten Informationen vornehmen.

In manchen Ausführungsbeispielen kann der Prozessor ausgebildet sein, um eine Anzeigeeigenschaft einer ausgewählten Anzeigeschicht des mehrschichtigen Anzeigenbereichs basierend auf der erfassten Auswahl zu ändern. Ein Benutzer könnte so beispielsweise die Bestimmung von Information, welche in einer Anzeigeschicht dargestellt werden, beeinflussen und seinen Bedürfnissen anpassen.

In zumindest einigen Ausführungsbeispielen kann die ausgewählte Anzeigeschicht der in der dreidimensionalen Darstellung vom Benutzer aus gesehen obersten Anzeigeschicht entsprechen. Durch die Darstellung der ausgewählten Anzeigeschichte als vom Benutzer aus gesehenen obersten Anzeigeschicht könnte eine einfachere Änderung der Anzeigeeigenschaft ermöglicht werden, da die Anzeigeschicht beispielsweise unverdeckt sein kann.

In manchen Ausführungsbeispielen kann der Prozessor ausgebildet sein, das Video- oder Steuersignal zu erzeugen, so dass an Stelle der Mehrzahl von dreidimensional dargestellten Anzeigeschichten eine zweidimensional dargestellte Anzeigeschicht auf dem mehrschichtigen Anzeigenbereich dargestellt wird. Die zweidimensional dargestellte Anzeigeschicht kann zumindest einer dreidimensional dargestellten Anzeigeschicht der Mehrzahl von dreidimensional dargestellten Anzeigeschichten entsprechen. Eine alternative Darstellung der Informationen in einer zweidimensional dargestellten Anzeigeschicht könnte in manchen Situationen eine Übersichtlichkeit und Erfassbarkeit der Informationen erhöhen.

In manchen Ausführungsbeispielen kann der Prozessor ausgebildet sein, um basierend auf dem Eingabesignal eine Bewegung relativ zum mehrschichtigen Anzeigenbereich zu bestimmen. Der Prozessor kann ausgebildet sein, um die Reihenfolge der Anzeigeschichten des mehrschichtigen Anzeigenbereichs basierend auf der detektierten Bewegung zu bestimmen oder um Anzeigeeigenschaften einer ausgewählten Anzeigeschicht des mehrschichtigen Anzeigenbereichs basierend auf der detektierten Bewegung zu bestimmen. Durch Nutzung der Bewegung zum Steuern des Informationswiedergabesystems könnte eine beiläufige Bedienung des Informationswiedergabesystem ermöglicht werden, beispielsweise falls das Informationswiedergabesystem in einem Fahrzeug umfasst ist, und der Fahrer des Fahrzeugs das Informationswiedergabesystem während des Fahrens bedient.

In einigen Ausführungsbeispielen könnte eine der dreidimensional angezeigten Anzeigeschichten eine Topographie des Gebiets relativ zum Fahrzeug darstellen. In einigen Ausführungsbeispielen könnte eine der dreidimensional angezeigten Anzeigeschichten eine von schräg oben dargestellte zweidimensionale Karte in einer Umgebung des Fahrzeugs darstellen. In einigen Ausführungsbeispielen könnte eine der dreidimensional angezeigten Anzeigeschichten eine Karte mit individuell auswählbaren Punkten in einer Umgebung des Fahrzeugs darstellen. In einigen Ausführungsbeispielen kann eine der dreidimensional angezeigten Anzeigeschichten Darstellungen von unterschiedlichen Navigationsinformationen umfassen. Durch die Darstellung von topographischen Informationen, Karteninformationen, individuell auswählbaren Punkten in der Umgebung des Fahrzeugs, oder Navigationsinformationen könnte das Informationswiedergabesystem als Navigationssystem genutzt werden, wobei die Mehrzahl von dreidimensional dargestellten Anzeigeschichten eine erhöhte Übersicht über die dargestellten Informationen und eine intuitivere Erfassung der Information ermöglichen können.

In zumindest einigen Ausführungsbeispielen kann das Informationswiedergabesystem eine Eingangsschnittstelle umfassen. Die Eingangsschnittstelle kann ausgebildet sein, um ein Lokalisierungssignal von einem Lokalisierungsmodul zu empfangen. Das Lokalisierungssignal kann Information über eine Position des Lokalisierungsmoduls umfassen. Der Prozessor kann ausgebildet sein, das Video- oder Steuersignal zu erzeugen, so dass eine dreidimensionale Anzeigeschicht der Mehrzahl von dreidimensional dargestellten Anzeigeschichten die Position des Lokalisierungsmoduls basierend auf dem Lokalisierungssignal darstellt. Durch Nutzung des Lokalisierungssignals könnte Information über die Umgebung des Lokalisierungsmoduls bereitgestellt werden, beispielsweise im Kontext einer Navigationsanwendung.

In manchen Ausführungsbeispielen kann die Eingangsschnittstelle ausgebildet sein, ein Standortinformationssignal zu erhalten. Der Prozessor kann ausgebildet ist, das Video- oder Steuersignal zu erzeugen, so dass auf zumindest einer Anzeigeschicht der Mehrzahl von dreidimensional dargestellten Anzeigeschichten Standortinformation basierend auf der Information über die Position und basierend auf dem Standortinformationssignal dargestellt wird. Durch Nutzung des Lokalisierungssignals könnten Standortinformationen über die Umgebung des Lokalisierungsmoduls bereitgestellt werden, wobei die Standortinformation, welche beispielsweise Karteninformation, topographische Information, oder Informationen über Punkte von Interesse umfassen kann, im Standortinformationssignal umfasst sein kann, und beispielsweise im Kontext einer Navigationslösung genutzt werden kann.

In einigen Ausführungsbeispielen kann das Informationswiedergabesystem ferner einen Datenspeicher umfassen, der ausgebildet ist, um das Standortinformationssignal der Eingangsschnittstelle bereitzustellen. Durch Nutzung eines Datenspeichers könnte die Standortinformation dem Informationswiedergabesystem bereitgestellt werden, beispielsweise ohne auf eine entfernt Datenübertragung, beispielsweise über ein mobiles Kommunikationssystem, angewiesen zu sein.

In zumindest manchen Ausführungsbeispielen könnte die Standortinformation Karteninformation und Zusatzinformation umfassen. Der Prozessor kann ausgebildet sein, auf zumindest einer Anzeigeschicht der Mehrzahl von dreidimensional dargestellten Anzeigeschichten Karteninformation bereitzustellen und auf zumindest einer weiteren Anzeigeschicht der Mehrzahl von dreidimensional dargestellten Anzeigeschichten Zusatzinformation bereitzustellen. Durch Bereitstellung der Karteninformation und Zusatzinformation könnte das Informationswiedergabesystem Information über eine Umgebung der Position bereitstellen, zusätzlich zur Karteninformation, um beispielsweise dem Nutzer eine Orientierung in der Umgebung der Position zu ermöglichen und Positionen von Interesse aufzuzeigen.

Ausführungsbeispiele stellen ferner ein Fahrzeug bereit, das das Informationswiedergabesystem und die Anzeigeeinrichtung aufweist. Ein Fahrzeug, welches das Informationswiedergabesystem und die Anzeigeeinrichtung umfasst, könnte einem Nutzer des Fahrzeugs eine intuitivere Bedienung des Fahrzeugs ermöglichen und eine übersichtlichere Darstellung von Information, etwa Karten- oder Navigationsinformation, ermöglichen.

Ausführungsbeispiele stellen ferner ein Verfahren bereit. Das Verfahren umfasst Erzeugen eines Video- oder Steuersignals, sodass ein aus der Sicht eines Benutzers mehrschichtiger Anzeigebereich durch eine Anzeigeeinrichtung wiedergebbar ist. Der mehrschichtige Anzeigenbereich umfasst eine Mehrzahl von dreidimensional dargestellten Anzeigeschichten. Unterschiedliche Anzeigeschichten der Mehrzahl von dreidimensional dargestellten Anzeigeschichten stellen unterschiedliche Informationen für den Benutzer bereit, wobei die unterschiedlichen Informationen in unterschiedlichen Gruppen von Informationen umfasst sind, wobei unterschiedliche Anzeigeschichten Informationen aus unterschiedlichen Gruppen für den Benutzer bereitstellen. Das Verfahren umfasst ferner Bereitstellen des Video- oder Steuersignals der Anzeigeeinrichtung. Die Gruppen umfassen Routeninformation, Straßeninformation, Information über Bauwerke, Information über Topographie, Information über Natur und Information über Punkte von Interesse umfassen, und wobei die unterschiedlichen Informationen einen Zusammenhang aufweisen.

Ausführungsbeispiele schaffen ferner ein Programm mit einem Programmcode zum Durchführen des Verfahrens, wenn der Programmcode auf einem Computer, einem Prozessor, einem Controller oder einer programmierbaren Hardwarekomponente ausgeführt wird. Ausführungsbeispiele schaffen auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Weitere vorteilhafte Ausgestaltungen werden nachfolgend anhand der in den Zeichnungen dargestellten Ausführungsbeispiele, auf welche Ausführungsbeispiele generell jedoch nicht insgesamt beschränkt sind, näher beschrieben. Es zeigen:
- Fig. 1: illustriert ein Blockdiagramm eines Ausführungsbeispiels eines Informationswiedergabesystems;
- Fig. 2: zeigt eine schematische Darstellung einer Anzeige basierend auf einem Video- oder Steuersignals auf einer Anzeigeeinrichtung einer beispielhaften Implementierung eines Informationswiedergabesystems;
- Fig. 3: illustriert ein Blockdiagramm eines weiteren Ausführungsbeispiels des Informationswiedergabesystems;
- Fig. 4: zeigt eine schematische Darstellung einer Anzeige basierend auf einem Video- oder Steuersignals auf einer Anzeigeeinrichtung einer beispielhaften Implementierung eines Informationswiedergabesystems, wobei der Prozessor ausgebildet ist, das Video- oder Steuersignal zu erzeugen, so dass an Stelle der Mehrzahl von dreidimensional dargestellten Anzeigeschichten die zweidimensional dargestellte Anzeigeschicht auf dem mehrschichtigen Anzeigenbereich dargestellt wird;
- Fig. 5: zeigt eine schematische Darstellung des dreidimensional dargestellten Anzeigebereichs, wobei die vom Benutzer aus gesehen oberste Anzeigeschicht Punkte von Interesse mit Zusatzinformation darstellt;
- Fig. 6: zeigt eine schematische Darstellung des dreidimensional dargestellten Anzeigebereichs, wobei die vom Benutzer aus gesehen oberste Anzeigeschicht das Fahrzeug mit Zusatzinformation, etwa Verkehrsinformation, Information über empfohlene Fahrzeugeinstellung oder Information über eine Durchschnittsgeschwindigkeit, sowie Karteninformation darstellt;
- Fig. 7: zeigt eine schematische Darstellung einer Anzeige basierend auf einem Video- oder Steuersignals auf einer Anzeigeeinrichtung einer beispielhaften Implementierung eines Informationswiedergabesystems;
- Fig. 8: zeigt eine Änderung der Anzeigeeigenschaft einer Anzeigeschicht durch Auswahl einer Karte basierend auf einer Satellitenaufnahme;
- Fig. 9: zeigt die Auswahl einer Funktion zum Starten einer Navigation;
- Fig. 10: zeigt eine schematische Darstellung einer Anzeige basierend auf einem Video- oder Steuersignals auf einer Anzeigeeinrichtung einer beispielhaften Implementierung eines Informationswiedergabesystems, wobei der Prozessor ausgebildet ist, das Video- oder Steuersignal zu erzeugen, so dass an Stelle der Mehrzahl von dreidimensional dargestellten Anzeigeschichten die zweidimensional dargestellte Anzeigeschicht auf dem mehrschichtigen Anzeigenbereich dargestellt wird;
- Fig. 11: zeigt eine Darstellung eines Hauptmenüs;
- Fig. 12: illustriert ein Blockdiagramm eines Ausführungsbeispiels eines Fahrzeugs; und
- Fig. 13: illustriert ein Flussdiagramm eines Ausführungsbeispiels eines Verfahrens.

Verschiedene Ausführungsbeispiele werden nun ausführlicher unter Bezugnahme auf die beiliegenden Zeichnungen beschrieben, in denen einige Ausführungsbeispiele dargestellt sind. In den Figuren können die Dickenabmessungen von Linien, Schichten und/oder Regionen um der Deutlichkeit Willen übertrieben dargestellt sein.

Bei der nachfolgenden Beschreibung der beigefügten Figuren, die lediglich einige exemplarische Ausführungsbeispiele zeigen, können gleiche Bezugszeichen gleiche oder vergleichbare Komponenten bezeichnen. Ferner können zusammenfassende Bezugszeichen für Komponenten und Objekte verwendet werden, die mehrfach in einem Ausführungsbeispiel oder in einer Zeichnung auftreten, jedoch hinsichtlich eines oder mehrerer Merkmale gemeinsam beschrieben werden. Komponenten oder Objekte, die mit gleichen oder zusammenfassenden Bezugszeichen beschrieben werden, können hinsichtlich einzelner, mehrerer oder aller Merkmale, beispielsweise ihrer Dimensionierungen, gleich, jedoch gegebenenfalls auch unterschiedlich ausgeführt sein, sofern sich aus der Beschreibung nicht etwas anderes explizit oder implizit ergibt.

Obwohl Ausführungsbeispiele auf verschiedene Weise modifiziert und abgeändert werden können, sind Ausführungsbeispiele in den Figuren als Beispiele dargestellt und werden hier-in ausführlich beschrieben. Es sei jedoch klargestellt, dass nicht beabsichtigt ist, Ausführungsbeispiele auf die jeweils offenbarten Formen zu beschränken, sondern dass Ausführungsbeispiele vielmehr sämtliche funktionale und/oder strukturelle Modifikationen, Äquivalente und Alternativen, die im Bereich der Erfindung liegen, abdecken sollen. Gleiche Bezugszeichen bezeichnen in der gesamten Figurenbeschreibung gleiche oder ähnliche Elemente.

Man beachte, dass ein Element, das als mit einem anderen Element "verbunden" oder "verkoppelt" bezeichnet wird, mit dem anderen Element direkt verbunden oder verkoppelt sein kann oder dass dazwischenliegende Elemente vorhanden sein können. Wenn ein Element dagegen als "direkt verbunden" oder "direkt verkoppelt" mit einem anderen Element bezeichnet wird, sind keine dazwischenliegenden Elemente vorhanden. Andere Begriffe, die verwendet werden, um die Beziehung zwischen Elementen zu beschreiben, sollten auf ähnliche Weise interpretiert werden (z.B., "zwischen" gegenüber "direkt dazwischen", "angrenzend" gegenüber "direkt angrenzend" usw.).

Die Terminologie, die hierin verwendet wird, dient nur der Beschreibung bestimmter Ausführungsbeispiele und soll die Ausführungsbeispiele nicht beschränken. Wie hierin verwendet, sollen die Singularformen "einer," " eine", "eines " und "der, die, das" auch die Plural-formen beinhalten, solange der Kontext nicht eindeutig etwas anderes angibt. Ferner sei klargestellt, dass die Ausdrücke wie z.B. "beinhaltet", "beinhaltend", "aufweist", "umfasst", "umfassend" und/oder "aufweisend", wie hierin verwendet, das Vorhandensein von genannten Merkmalen, ganzen Zahlen, Schritten, Arbeitsabläufen, Elementen und/oder Komponenten angeben, aber das Vorhandensein oder die Hinzufügung von einem bzw. einer oder mehreren Merkmalen, ganzen Zahlen, Schritten, Arbeitsabläufen, Elementen, Komponenten und/oder Gruppen davon nicht ausschließen.

Solange nichts anderes definiert ist, haben sämtliche hierin verwendeten Begriffe (einschließlich von technischen und wissenschaftlichen Begriffen) die gleiche Bedeutung, die ihnen ein Durchschnittsfachmann auf dem Gebiet, zu dem die Ausführungsbeispiele gehören, beimisst. Ferner sei klargestellt, dass Ausdrücke, z.B. diejenigen, die in allgemein verwendeten Wörterbüchern definiert sind, so zu interpretieren sind, als hätten sie die Bedeutung, die mit ihrer Bedeutung im Kontext der einschlägigen Technik konsistent ist, und nicht in einem idealisierten oder übermäßig formalen Sinn zu interpretieren sind, solange dies hierin nicht ausdrücklich definiert ist.

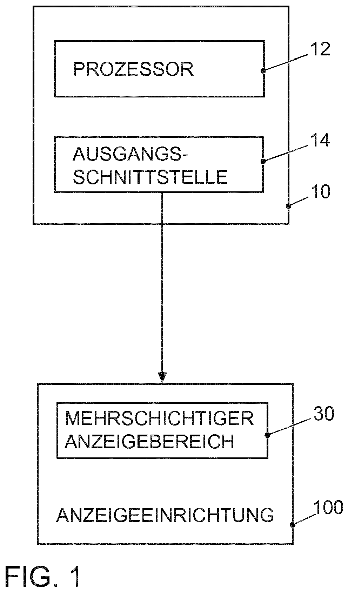

Fig. 1 illustriert ein Blockdiagramm eines Ausführungsbeispiels eines Informationswiedergabesystems 10. Das Informationswiedergabesystem 10 umfasst einen Prozessor 12, der ausgebildet ist, um ein Video- oder Steuersignal zu erzeugen, sodass ein aus der Sicht eines Benutzers mehrschichtiger Anzeigebereich 30 durch eine Anzeigeeinrichtung 100 wiedergebbar ist. Der mehrschichtige Anzeigenbereich 30 umfasst eine Mehrzahl von dreidimensional dargestellten Anzeigeschichten. Unterschiedliche Anzeigeschichten der Mehrzahl von dreidimensional dargestellten Anzeigeschichten stellen unterschiedliche Informationen für den Benutzer bereit. Das Informationswiedergabesystem 10 umfasst ferner eine Ausgangseinrichtung 14, die ausgebildet ist, um das Video- oder Steuersignal der Anzeigeeinrichtung 100 bereitzustellen. Der Prozessor 12 ist mit der Ausgangseinrichtung 14 verbunden.

Das Informationswiedergabesystem 10 kann beispielsweise Teil eines sogenannten Infotainmentsystems (von Information und engl. Entertainment = Unterhaltung) sein, beispielsweise Teil eines Infotainmentsystems eines Fahrzeugs. In zumindest manchen Ausführungsbeispielen kann das Informationswiedergabesystem 10 ausgebildet sein, um als Informationswiedergabesystem für ein Fahrzeug zu fungieren.

Die Anzeigeeinrichtung 100 kann beispielsweise ein Bildschirm oder andere visuelle Wiedergabeeinrichtung sein, auf der basierend auf dem Video- oder Steuersignal für den Benutzer sichtbar veränderbarer Inhalt angezeigt werden kann, etwa der mehrschichtige Anzeigebereich 30. Die Anzeigeeinrichtung 100 kann beispielsweise einen TFT-Bildschirm (Thin Film Transistor, Dämmschichttransistor), einen berührungsempfindlicher Bildschirm, einen sogenannten Touchscreen oder ein Head-Up-Display (Kopf-Hoch-Anzeigesystem) umfassen, der z.B. in einer Mittelkonsole eines Fahrzeugs oder vom Benutzer aus gesehen hinter dem Lenkrad eines Fahrzeugs im Bereich des Armaturenbretts angeordnet ist.

Der mehrschichtige Anzeigebereich 30 kann beispielsweise eine Mehrzahl von schichtweise vertikal übereinander dargestellten dreidimensional dargestellten Anzeigeschichten umfassen. Eine Anzeigeschicht der Mehrzahl von dreidimensional dargestellten Anzeigeschicht kann dabei beispielsweise die volle Breite des mehrschichtigen Anzeigebereichs 30 einnehmen, oder einen Teil der Breite, etwa beispielsweise 40%, 50%, 60%, 70%, 75%, 80%, 90%, 95%. Die dreidimensional dargestellten Anzeigeschichten können könnten sich beispielsweise überlappen, beispielsweise um einen Zusammenhang von Informationen einer Anzeigeschicht zu Informationen benachbarter Anzeigeschichten zu verdeutlichen. Ein unterer Teil des mehrschichtigen Anzeigebereichs 30, etwa die unteren 20%, 30%, 33%, 40%, 45%, 50%, können beispielsweise eine vom Benutzer aus gesehen vordere Kante der dreidimensional dargestellten Anzeigeschichten darstellen, während der restliche Teil überlagerte gekippte Darstellungen der dreidimensional dargestellten Anzeigeschichten darstellen kann. Der mehrschichtige Anzeigenbereich 30 kann beispielsweise ein Teil einer zur Verfügung stehenden Anzeigefläche der Anzeigeeinrichtung 100 sein, in dem die Anzeigeeinrichtung basierend auf dem Video- oder Steuersignal die Mehrzahl von dreidimensional dargestellten Anzeigeschichten darstellen kann. Ist die Anzeigeeinrichtung 100 vom Benutzer aus gesehen hinter dem Lenkrad angeordnet oder hat die Anzeigeeinrichtung 100 eine deutlich größere Breite als Höhe, etwa im Verhältnis 2:1 oder größer, so kann der mehrschichtige Anzeigebereich 30 beispielsweise die Mitte der Anzeigeeinrichtung 100 einnehmen, und andere Bedien- oder Informationselemente, beispielsweise eine Tacho-, Geschwindigkeits- oder Drehzahlanzeige in einem Fahrzeug, können seitlich versetzt zu dem mehrschichtigen Anzeigebereich 30 angezeigt werden.

Das Video- oder Steuersignal kann z.B. ein elektronisches, ein optisches oder ein Radiosignal sein. Der Prozessor 12 kann z.B. das Videosignal oder das Steuersignal in einem Format bereitstellen, das von der jeweiligen Anzeigeeinrichtung (z.B. die Anzeigeeinrichtung 100) zur Wiedergabe von Informationen (z.B. in Form von Bildern) verarbeitet werden kann.

Die unterschiedlichen Informationen sind in unterschiedlichen Gruppen von Informationen umfasst. Die Gruppen umfassen Routeninformation, Straßeninformation, Information über Bauwerke, Information über Topographie, Information über Natur und Information über Punkte von Interesse. Unterschiedliche Anzeigeschichten stellen Information aus unterschiedlichen Gruppen oder unterschiedliche Information aus gleichen Gruppen für den Benutzer bereit. Die unterschiedlichen Informationen weisen einen Zusammenhang auf, beispielsweise einen örtlichen Zusammenhang, wie etwa zwischen einer Straßenkarte und einer topographischen Karte, oder eine Anzeigeschicht kann Kontextinformation über Information einer anderen Anzeigeschicht umfassen.

Der Prozessor 12 kann beispielsweise einer programmierbaren Hardwarekomponente entsprechen, beispielsweise einem Zentralprozessor eines Computersystems, einem Digitalen Signal-Prozessor (DSP), einem mobilen Prozessor, oder einer Recheneinheit eines Ein-Chip-Systems (auch engl. System-on-a-Chip, SoC). Die Ausgangseinrichtung 14 kann beispielsweise eine eigenständige Hardwareeinheit (z.B. ein an einen Kommunikationsbus angeschlossener Sender) oder auch Teil des Prozessors 12 (z.B. Ausgangsschnittstelle des Prozessors 12) sein. Die Ausgangseinrichtung 14 kann beispielsweise einem oder mehreren Ausgängen zum Übertragen von Informationen entsprechen, etwa in digitalen Bitwerten, basierend auf einem Code, innerhalb eines Moduls, zwischen Modulen, oder zwischen Modulen verschiedener Entitäten.

In zumindest manchen Ausführungsbeispielen können die dreidimensional dargestellten Anzeigeschichten der Mehrzahl von dreidimensional dargestellten Anzeigeschichten im Wesentlichen durch parallel zueinander und übereinander angeordnete Anzeigeebenen dargestellt werden. Die dreidimensional dargestellten Anzeigeschichten können beispielsweise als Anzeigeebenen dargestellt werden, welche vom Benutzer aus gesehen einer Darstellung aus einem Blickwinkel zwischen 10° und 80° über einer Ebene entsprechen. Die dreidimensional dargestellten Anzeigeschichten können beispielsweise auch von einer Ebene abweichen, d.h. sie können Information umfassen, die von der Anzeigeebene vom Benutzer aus gesehen nach oben oder nach unten abweicht, wie beispielsweise in einer topographischen Karte. Beispielsweise können die dreidimensional dargestellten Anzeigeschichten parallel zueinander und übereinander angeordnet sein, um einen Zusammenhang der auf den unterschiedlichen Anzeigeschichten dargestellten unterschiedlichen Informationen darzustellen, beispielsweise einen Zusammenhang zwischen einer Topographischen Landkarte und einer Straßenkarte. Die dreidimensional dargestellten Anzeigeschichten der Mehrzahl von dreidimensional dargestellten Anzeigeschichten können sich zumindest teilweise überlagern. Beispielsweise können Anzeigeschichten als Anzeigeebenen dargestellt werden, welche vom Benutzer aus gesehen einer Darstellung aus einem Blickwinkel zwischen 10° und 80° über einer Ebene entsprechen. Eine von Benutzer aus gesehen vordere Karte einer Anzeigeebene kann beispielsweise von einer vom Benutzer aus gesehen höher positionierte Anzeigeebene nicht überdeckt werden, während ein vom Benutzer aus gesehen hinterer Teil der Anzeigeebene durch die vom Benutzer aus gesehen höher positionierte Anzeigeebene überdeckt wird. Durch die zumindest teilweise Überlagerung kann beispielsweise der Zusammenhang zwischen den unterschiedlichen Informationen klarer dargestellt werden.

Die dreidimensional dargestellten Anzeigeschichten können sich beispielsweise jeweils über mehr als die Hälfte einer Breite der Anzeigeeinrichtung erstrecken. In zumindest einigen Ausführungsbeispielen können benachbarte dreidimensional dargestellte Anzeigeschichten der Mehrzahl von dreidimensional dargestellten Anzeigeschichten einen vertikalen Abstand von weniger als 1/3 einer Höhe der Anzeigeeinrichtung 100 und mehr als 1/20 der Höhe der Anzeigeeinrichtung 100 zueinander haben, etwa 30%, 25%, 22,5%, 20%, 18%, 17,5%, 16%, 15%, 12%. 10%, 7,5% oder 6%.

In einigen Ausführungsbeispielen kann eine dreidimensional dargestellte Anzeigeschicht der Mehrzahl von dreidimensional dargestellten Anzeigeschichten einer Darstellung aus einem Blickwinkel zwischen 10° und 80° über einer Ebene entsprechen, etwa 10°, 12°, 15°, 17,5°, 20°, 22,5°, 25°, 30°, 40°, 50°, 60°, 70° oder 80%. Durch die Darstellung aus dem Blickwinkel zwischen 10° und 80° über der Ebene kann der Prozessor 12 aus einer zweidimensionalen Information, etwa einer Straßenkarte, eine dreidimensional dargestellte Anzeigeschicht erzeugen, welche mit dreidimensional dargestellten Anzeigeschichten mit dreidimensionalem Inhalt, etwa topographischer Information, so zusammen darstellbar ist, dass ein Zusammenhang zwischen den unterschiedlichen Informationen der unterschiedlichen Anzeigeebenen erfassbar ist.

In zumindest manchen Ausführungsbeispielen kann eine der dreidimensional angezeigten Anzeigeschichten eine Topographie des Gebiets relativ zum Fahrzeug darstellen. In einigen Ausführungsbeispielen kann eine der dreidimensional dargestellten Anzeigeschichten eine von schräg oben dargestellte zweidimensionale Karte in einer Umgebung des Fahrzeugs darstellen. Die zweidimensionale Karte kann beispielsweise Straßen, Wege, Abzweigungen, Straßennamen, Gebäudeumrisse, Landschaftseigenschaften oder Erkennungspunkte umfassen. In zumindest einigen Ausführungsbeispielen kann zumindest eine der dreidimensional dargestellten Anzeigeschichten eine Karte mit individuell auswählbaren Punkten in einer Umgebung des Fahrzeugs darstellen. Die individuell auswählbaren Punkte können beispielsweise Punkten von Interesse, landschaftlichen Erkennungspunkten oder ortsgebundenen Verkehrsinformationen entsprechen. In manchen Ausführungsbeispielen kann eine der dreidimensional angezeigten Anzeigeschichten Darstellungen von unterschiedlichen Navigationsinformationen umfassen. Navigationsinformation kann beispielsweise Information über zumindest eine Route, Information über Abbiegeanweisungen, Information über eine zurückgelegte Strecke, Information über eine verbleibende Strecke oder Information über eine Navigationszeit umfassen.

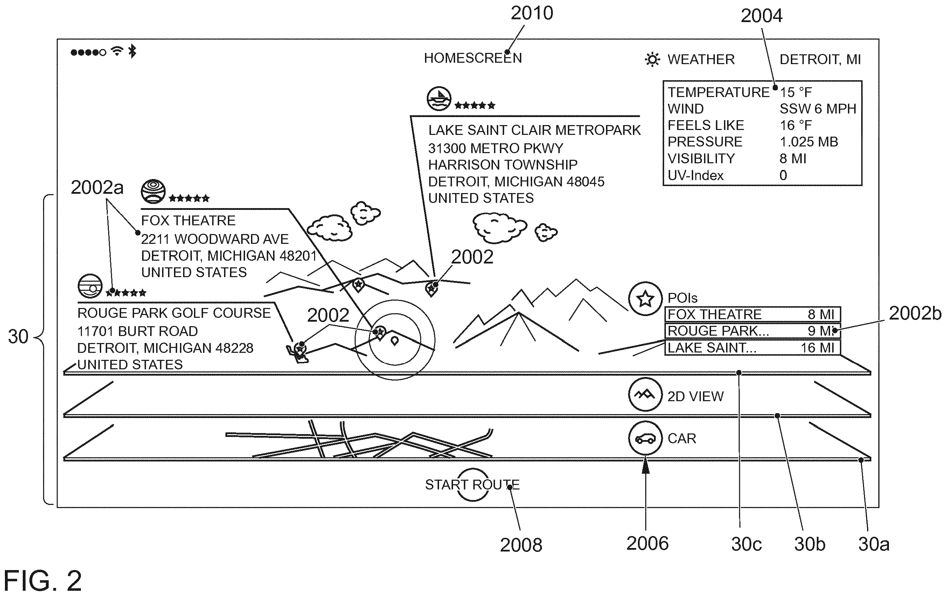

Fig. 2 zeigt eine schematische Darstellung einer Anzeige basierend auf einem Video- oder Steuersignals auf einer Anzeigeeinrichtung einer beispielhaften Implementierung eines Informationswiedergabesystems. In der unteren Darstellungshälfte ist der mehrschichtige Anzeigebereich 30 mit der Mehrzahl von dreidimensional dargestellten Anzeigeschichten dargestellt. Die Mehrzahl von dreidimensional dargestellten Anzeigeschichten umfasst beispielhaft die Anzeigeschichten Kartenmaterial 30a, topographische Ansicht 30b, und Punkte von Interesse (auch engl. Points Of Interest, POI) 30c, wobei die topographische Ansicht 30b in die vom Benutzer aus gesehen oberste Anzeigeschicht Punkte von Interesse 30c hineinragt.

Die Anzeigeschicht Kartenmaterial 30a umfasst eine dreidimensionale Darstellung des zweidimensionalen Kartenmaterials, wie z.B. oben geschrieben. Die unterschiedlichen dreidimensional dargestellten Anzeigeschichten können dabei Darstellungen aus unterschiedlichen Blickwinkeln aufweisen, um einen dreidimensionalen Bildeindruck zu verstärken, da die vom Benutzer aus gesehen oberen Anzeigeschichten vom Benutzer aus gesehen beispielsweise visuell einen flacheren Blickwinkel aufweisen können, da sie visuell weiter von einer Referenzebene entfernt sind. Die Anzeigeschicht Punkte von Interesse 30c umfasst Markierungspunkte 2002 und Zusatzinformationen 2002a, etwa Bewertungen der Punkte von Interesse. Außerhalb des dreidimensional dargestellten Anzeigebereichs 30 befinden sich zusätzliche Informationen oder Bedienelemente, beispielsweise Wetterinformation 2004, Distanzinformation zu den Punkten von Interesse 2002b, Bedienelemente zum Konfigurieren der Anzeigeebenen 2006, ein Bedienelement zum Starten einer Navigation 2008 und ein Bedienelement 2010 zur Auswahl des Hauptmenüs (auch engl. Homescreen).

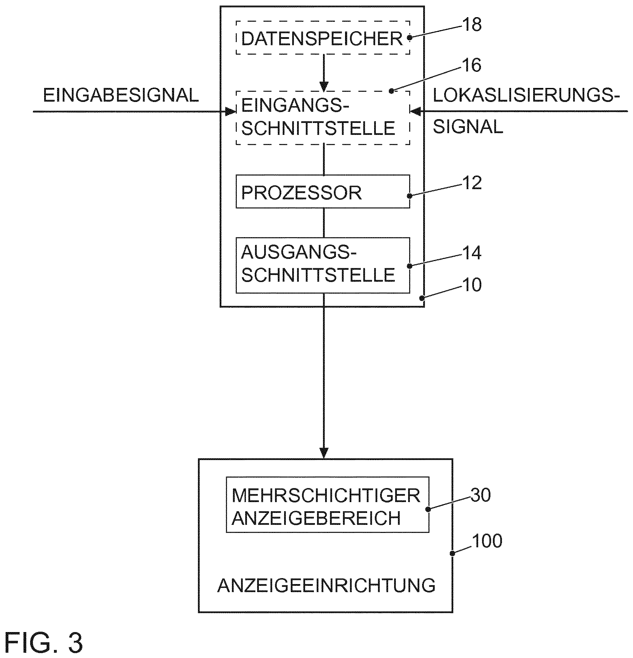

Fig. 3 illustriert ein Blockdiagramm eines Ausführungsbeispiels eines Informationswiedergabesystems 10. Das Informationswiedergabesystem ist ähnlich implementiert wie das in Fig. 1 gezeigte Informationswiedergabesystem 10. Das Informationswiedergabesystem 10 umfasst einen Prozessor 12 und eine Ausgangsschnittstelle 14, welche ein Video- oder Steuersignal einer Anzeigeeinrichtung 100 bereitstellt. Die Anzeigeeinrichtung 100 umfasst einen mehrschichtigen Anzeigebereich 30, welcher eine Mehrzahl von dreidimensional dargestellten Anzeigeschichten umfasst. Wie durch die gestrichelten Linien angedeutet umfasst das Informationswiedergabesystem 10 optional ferner eine Eingangsschnittstelle 16 und einen Datenspeicher 18. Der Prozessor 12 ist mit der Ausgangsschnittstelle 14 und optional mit der optionalen Eingangsschnittstelle 16 verbunden. Der optionale Datenspeicher 18 ist optional mit der Eingangsschnittstelle 16 verbunden. Die Eingangsschnittstelle 16 kann beispielsweise einem oder mehreren Eingängen zum Empfangen von Informationen entsprechen, etwa in digitalen Bitwerten, basierend auf einem Code, innerhalb eines Moduls, zwischen Modulen, oder zwischen Modulen verschiedener Entitäten. Die Eingangsschnittstelle 16 kann beispielsweise eine eigenständige Hardwareeinheit (z.B. ein an einen Kommunikationsbus angeschlossener Empfänger) oder auch Teil des Prozessors 12 (z.B. Eingangsschnittstelle des Prozessors 12) sein. In einigen Ausführungsbeispielen kann der Datenspeicher18 einem Computerlesbaren Speichermedium entsprechen.

In einigen Ausführungsbeispielen kann die Eingangsschnittstelle 16 ausgebildet sein, um ein Eingabesignal zu empfangen. Das Eingabesignal könnte beispielsweise Information über eine Position einer Berührung der Anzeigeeinrichtung 100, Annäherung zu der Anzeigeeinrichtung 100 oder eine Eingabe über eine Eingabeeinrichtung umfassen. Der Prozessor 12 kann ausgebildet sein, um basierend auf dem Eingabesignal eine Auswahl bezüglich des mehrschichtigen Anzeigenbereichs 30 zu erfassen. In zumindest einigen Ausführungsbeispielen kann die Berührung der Anzeigeeinrichtung 100 einen von einer Annäherung zu der Anzeigeeinrichtung 100 verschiedenen Effekt haben.

In einigen Ausführungsbeispielen kann die Information über die Position einer Berührung der Anzeigeeinrichtung 100 beispielsweise von einem Berührungsempfindlichen Sensor bereitgestellt werden, etwa von einem kapazitiven Berührungssensor, einem resistiven Berührungssensor, einem optischen oder einem akustischen Berührungssensor. Die Information über die Annäherung zu der Anzeigeeinrichtung 100 kann beispielsweise über einen kapazitiven Berührungssensor, welcher ausgebildet ist, um kapazitive Veränderungen vor der Berührung zu erkennen, oder einen optischen oder akustischen Sensor, beispielsweise basierend auf einem Laufzeitverfahren oder basierend auf einer anderen Analyse reflektierten Lichts oder Schalls bereitgestellt werden. Die Eingabeeinrichtung kann beispielsweise einer Tastatur, einer Maus, einem Steuerknüppel, einem Drehregler oder einer Kombination von mehreren Eingabegeräten entsprechen. Die Auswahl kann beispielsweise einer Position, beispielsweise in einem Koordinatensystem entsprechen, oder einer Auswahl einer Option von mehreren möglichen Optionen.

In zumindest manchen Ausführungsbeispielen kann der Prozessor 12 ausgebildet sein, um die Reihenfolge der Anzeigeschichten des mehrschichtigen Anzeigenbereichs 30 basierend auf der erfassten Auswahl zu bestimmen. Der Prozessor 12 kann die Reihenfolge beispielsweise durch die Erkennung einer Ziehbewegung bestimmen, welcher der Benutzer ausführt, um eine Anzeigeschicht an eine andere Stelle der Reihenfolge der Anzeigeschichten zu ziehen, beispielsweise basierend auf der detektierten Bewegung, oder der Prozessor 12 kann die Reihenfolge beispielsweise durch die Erfassung der Auswahl einer Anzeigeschicht bestimmen und die selektierte Anzeigeschicht auf der vom Benutzer aus gesehen obersten Stelle darzustellen. Ist die Anzeigeschicht selektiert, so kann der Prozessor 12 beispielsweise eine Wischgeste basierend auf der detektierten Bewegung erkennen und die Reihenfolge der selektierten Anzeigeschicht relativ zu seinen benachbarten Anzeigeschichten verändern.

In einigen Ausführungsbeispielen kann der Prozessor 12 ausgebildet sein, um eine Anzeigeeigenschaft einer ausgewählten Anzeigeschicht des mehrschichtigen Anzeigenbereichs 30 basierend auf der erfassten Auswahl zu ändern. Die ausgewählte Anzeigeschicht kann beispielsweise der in der dreidimensionalen Darstellung vom Benutzer aus gesehen obersten Anzeigeschicht entsprechen. Der Prozessor 12 kann ausgebildet sein, die Anzeigeeigenschaft basierend auf der detektierten Bewegung zu bestimmen. Der Prozessor kann beispielsweise ausgebildet sein, um eine Wischgeste basierend auf der detektierten Bewegung erkennen und ein schnelles Wechseln zwischen verschiedenen vordefinierten Anzeigeprofilen bereitstellen, oder der Prozessor 12 kann ausgebildet sein, um über die Erfassung der Auswahl die Anpassung von Anzeigeeigenschaften in einem Menü erkennen und die Anzeigeeigenschaft der ausgewählten Anzeigeschicht basierend auf der Anpassung ändern.

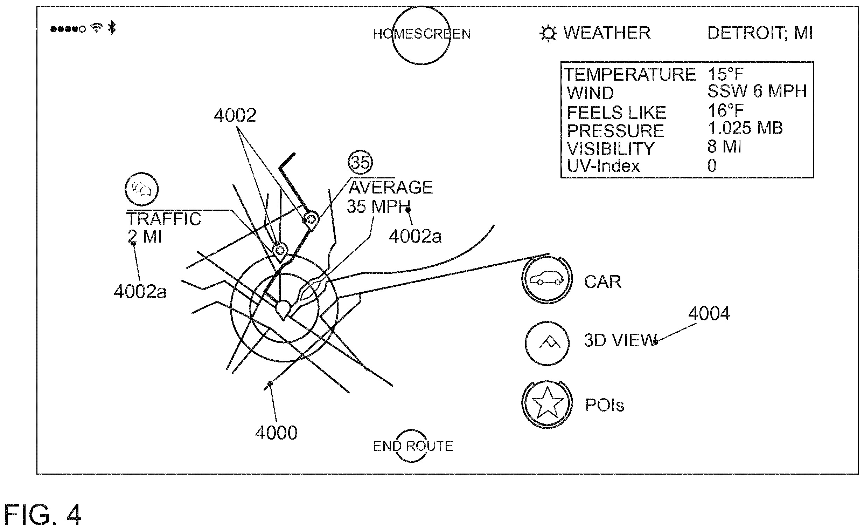

In einigen Ausführungsbeispielen kann der Prozessor 12 ausgebildet sein, das Video- oder Steuersignal zu erzeugen, so dass an Stelle der Mehrzahl von dreidimensional dargestellten Anzeigeschichten eine zweidimensional dargestellte Anzeigeschicht auf dem mehrschichtigen Anzeigenbereich 30 dargestellt wird. Die zweidimensional dargestellte Anzeigeschicht könnte zumindest einer dreidimensional dargestellten Anzeigeschicht der Mehrzahl von dreidimensional dargestellten Anzeigeschichten entsprechen. Beispielsweise kann die zweidimensional dargestellte Anzeigeschicht Information von zumindest einer dreidimensional dargestellten Anzeigeschicht umfassen, beispielsweise Karteninformation und Information über Punkte von Interesse in einer Navigationsanwendung. Ein Wechseln zwischen den dreidimensional dargestellten Anzeigeschichten und der zweidimensional dargestellten Anzeigeschicht kann beispielsweise auf der Erfassung der Auswahl basieren, beispielsweise bei Auswahl eines Menüpunkts 4004 aus Fig. 4.

Fig. 4 zeigt eine schematische Darstellung einer Anzeige basierend auf einem Video- oder Steuersignals auf einer Anzeigeeinrichtung einer beispielhaften Implementierung eines Informationswiedergabesystems. Der Prozessor 12 ist ausgebildet, das Video- oder Steuersignal zu erzeugen, so dass an Stelle der Mehrzahl von dreidimensional dargestellten Anzeigeschichten die zweidimensional dargestellte Anzeigeschicht auf dem mehrschichtigen Anzeigenbereich 30 dargestellt wird. Fig. 4 zeigt eine Kartendarstellung 4000 sowie mehrere Punkte von Interesse 4002 mit Zusatzinformation 4002a.

In zumindest manchen Ausführungsbeispielen kann die Eingangsschnittstelle 16 ausgebildet sein, um ein Lokalisierungssignal von einem Lokalisierungsmodul zu empfangen. Das Lokalisierungssignal kann beispielsweise Information über eine Position des Lokalisierungsmoduls umfassen. Der Prozessor 12 kann ausgebildet sein, das Video- oder Steuersignal zu erzeugen, so dass eine dreidimensionale Anzeigeschicht der Mehrzahl von dreidimensional dargestellten Anzeigeschichten die Position des Lokalisierungsmoduls basierend auf dem Lokalisierungssignal darstellt. Der Prozessor 12 kann beispielsweise ausgebildet sein, das Video- oder Steuersignal zu erzeugen, so dass eine dreidimensionale Anzeigeschicht der Mehrzahl von dreidimensional dargestellten Anzeigeschichten die Position des Lokalisierungsmoduls basierend auf dem Lokalisierungssignal in einer topographischen Ansicht oder einer Kartenansicht darstellt.

In zumindest manchen Ausführungsbeispielen kann das Lokalisierungssignal empfangene Satellitendaten oder Mobilfunklokalisierungsdaten umfassen, oder das Lokalisierungssignal kann eine Position oder eine Mehrzahl von Positionen umfassen. In zumindest manchen Ausführungsbeispielen kann das Lokalisierungsmodul einem Navigationsempfänger, einem GPS-Empfänger oder einem mobilen Sendeempfänger entsprechen.

In einigen Ausführungsbeispielen kann die Eingangsschnittstelle ausgebildet sein, um ein Standortinformationssignal zu erhalten. Der Prozessor 12 kann ausgebildet sein, um das Videooder Steuersignal zu erzeugen, so dass auf zumindest einer Anzeigeschicht der Mehrzahl von dreidimensional dargestellten Anzeigeschichten Standortinformation basierend auf der Information über die Position und basierend auf dem Standortinformationssignal dargestellt wird. In zumindest manchen Ausführungsbeispielen kann die Standortinformation Karteninformation und Zusatzinformation umfassen. Der Prozessor 12 kann ausgebildet sein, um auf zumindest einer Anzeigeschicht der Mehrzahl von dreidimensional dargestellten Anzeigeschichten Karteninformation bereitzustellen und auf zumindest einer weiteren Anzeigeschicht der Mehrzahl von dreidimensional dargestellten Anzeigeschichten Zusatzinformation bereitzustellen. In manchen Ausführungsbeispielen kann die Zusatzinformation zumindest ein Element der Gruppe von Information über Punkte von Interesse, Stauinformation, Wetterinformation, topographische Information, Information über Geschwindigkeitsbegrenzung, Information über Durchschnittsgeschwindigkeit, Information über empfohlene Fahrzeugeinstellungen, oder Information über Reisewarnungen umfassen. Das Informationswiedergabesystem 10 kann ferner den Datenspeicher 18 umfassen, der ausgebildet sein kann, um das Standortinformationssignal der Eingangsschnittstelle 16 bereitzustellen. Alternativ kann die Eingangsschnittstelle das Standortinformationssignal über das Internet, via Satellit oder von weiteren Datenträgern erhalten.

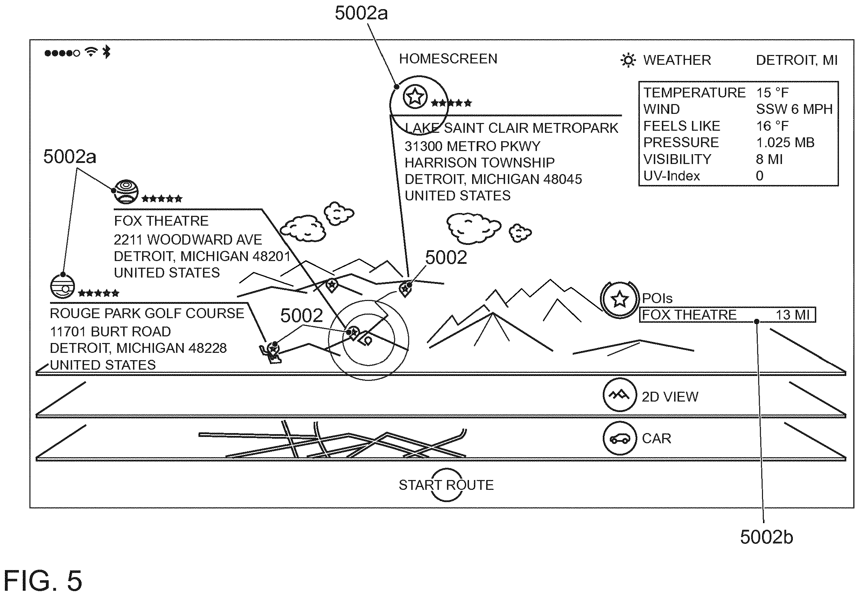

Folgende Figuren zeigen schematische Darstellungen von Anzeigen basierend auf einem Video- oder Steuersignals auf einer Anzeigeeinrichtung einer beispielhaften Implementierung eines Informationswiedergabesystems 10. In der 3D-Ansicht des dreidimensional dargestellten Anzeigebereichs hat der Benutzer beispielsweise die Möglichkeit, eine individuelle Darstellung zu konfigurieren, und zwar auf mehreren, beispielsweise drei, Ebenen, die übereinander im virtuellen Raum schweben können. Es werden beispielhaft 2 Funktionsebenen vorgestellt. Es können jedoch auch mehrere Ebenen hinzugefügt werden. Sie können beispielsweise dasselbe Gebiet der Karte, auf der sich der Fahrer befindet, zeigen, aber mit unterschiedlichen Informationen (Fig. 5-9). Ein Beispiel für eine solche Konfiguration: Auf der obersten Ebene mit den Höhen und Tiefen und geographischen Angaben, wie etwa die aktuelle Höhe über dem Meeresspiegel, kann der Benutzer die "Point-of-Interest" (PIO) konfigurieren, in der mittleren Ebene ist beispielsweise die Route und die Position des Fahrzeugs zu sehen. In der untersten Ebene "Höhen und Tiefen" befinden sich beispielsweise geographische Angaben wie etwa die aktuelle Höhe über dem Meeresspiegel. Die Ebenen können in manchen Ausführungsbeispielen frei von oben nach unten verschoben werden; individuelle Einstellungen werden beispielsweise in der vom Benutzer aus gesehen obersten Ebene durchgeführt. In manchen Ausführungsbeispielen kann der dreidimensional dargestellte Anzeigebereich auch durch eine zweidimensional dargestellte Anzeigeschicht ersetzt werden. Infos zu den Inhalten kann das System je nach Thema über das Internet, via Satellit oder von Datenträgern (Navigationssoftware, individuell vom User eingespeist) abrufen. Zudem können auch Daten wie das Wetter im Display angezeigt werden. Die Ebenen und Informationen können Fahrer und Beifahrer beispielsweise mittels Gestensteuerung auswählen. Das direkte Tippen und Wischen auf der Anzeigeeinrichtung kann ebenfalls möglich sein.

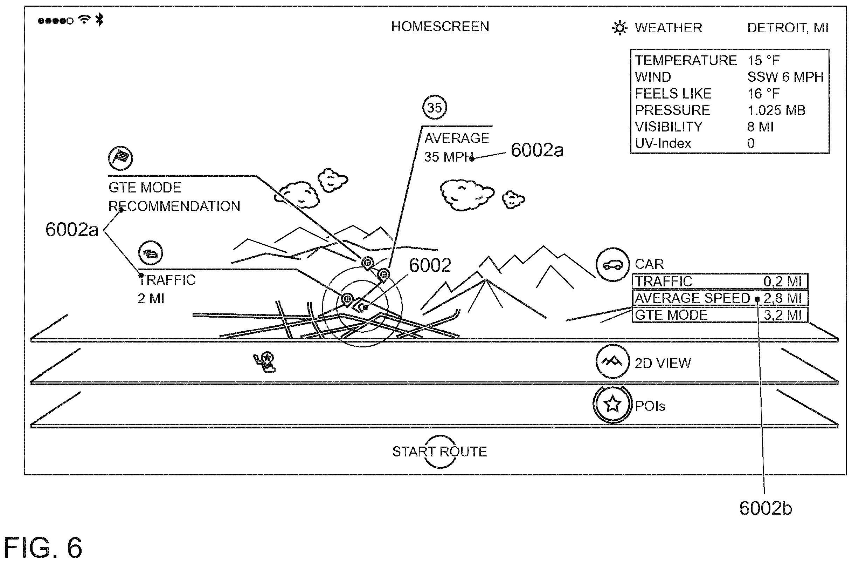

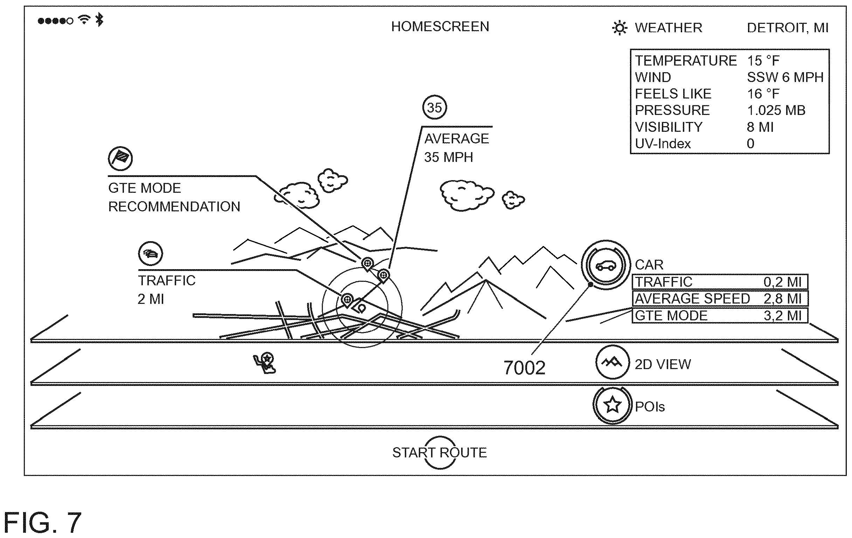

Fig. 5 zeigt eine schematische Darstellung des dreidimensional dargestellten Anzeigebereichs, wobei die vom Benutzer aus gesehen oberste Anzeigeschicht Punkte von Interesse 5002 mit Zusatzinformation 5002a darstellt. Weitere Information über die Punkte von Interesse ist am rechten Seitenrand 5002b dargestellt. Fig. 6 zeigt eine weitere schematische Darstellung des dreidimensional dargestellten Anzeigebereichs, wobei die vom Benutzer aus gesehen oberste Anzeigeschicht das Fahrzeug 6002 mit Zusatzinformation 6002a, etwa Verkehrsinformation, Information über empfohlene Fahrzeugeinstellung oder Information über eine Durchschnittsgeschwindigkeit, sowie Karteninformation darstellt. Weitere Information über das Fahrzeug ist am rechten Seitenrand 6002b dargestellt. Die Auswahl der obersten Fahrzeugschicht kann über eine Auswahl eines Bedienelements geschehen, etwa durch Auswahl des Bedienelements 7002 in Fig. 7.

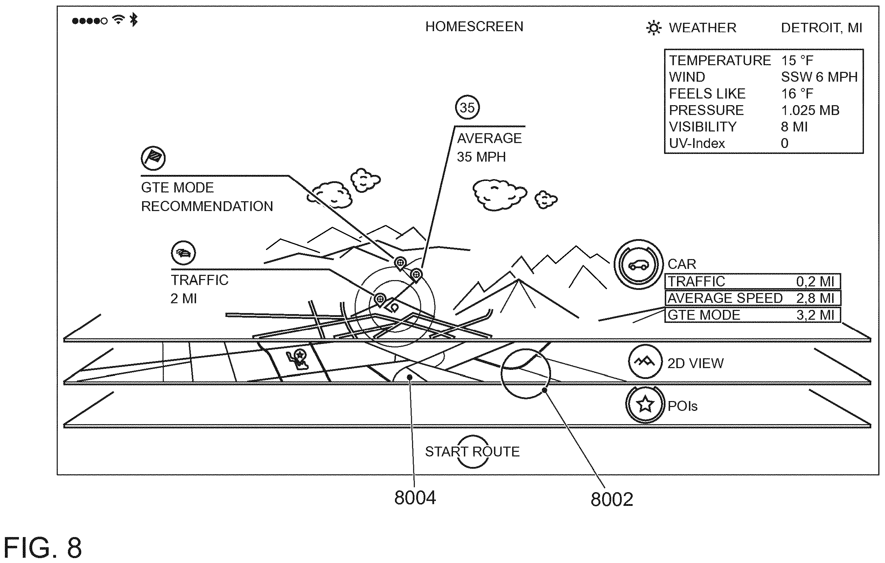

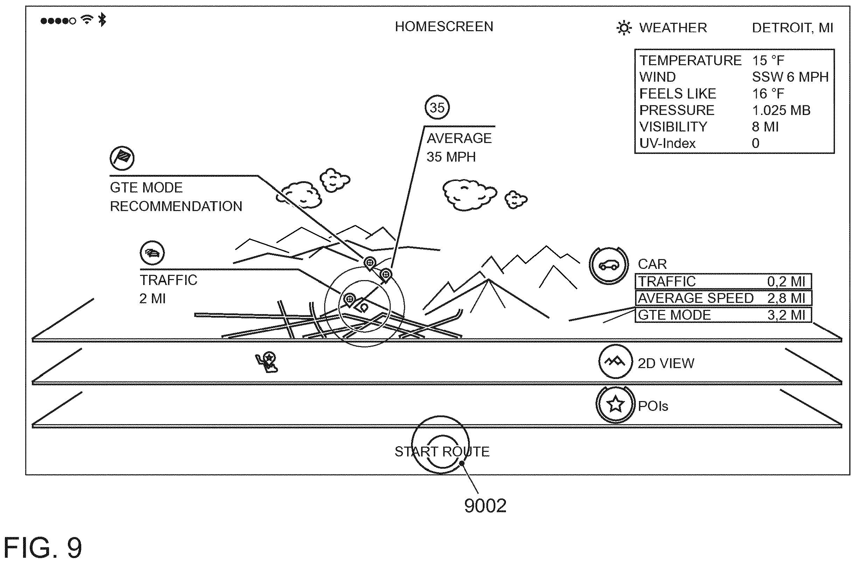

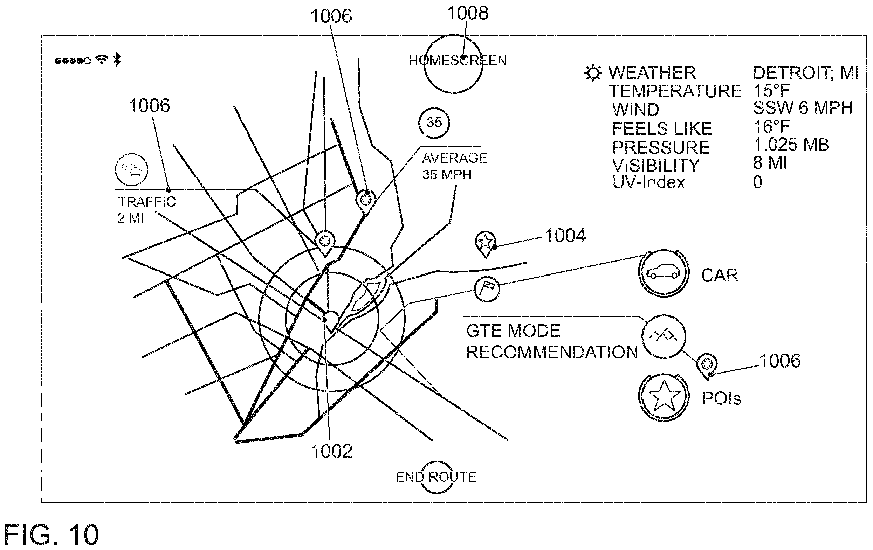

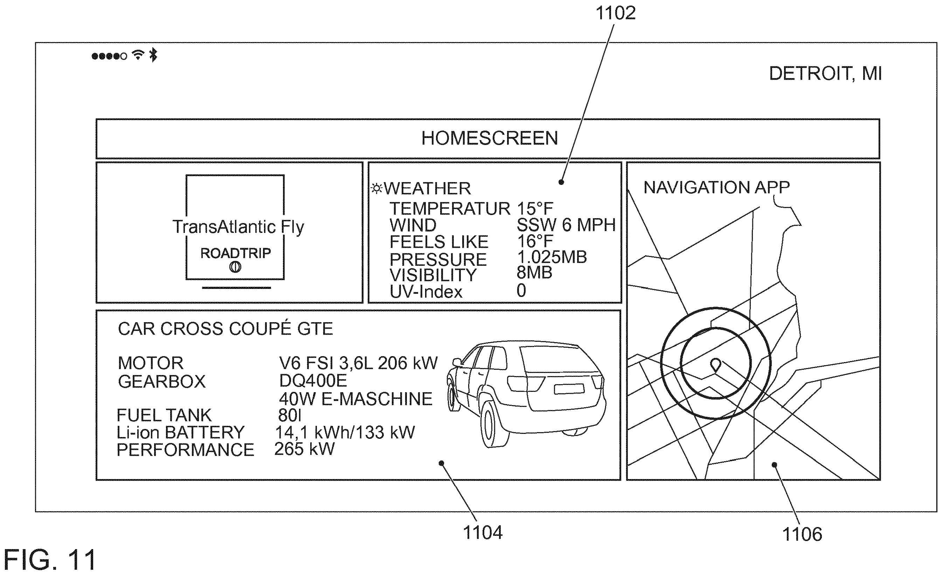

Fig. 8 zeigt eine Änderung der Anzeigeeigenschaft einer Anzeigeschicht durch Auswahl 8002 einer Karte basierend auf einer Satellitenaufnahme 8004. Fig. 9 zeigt die Auswahl einer Funktion zum Starten einer Navigation 9002. Nach Auswahl der Funktion kann der Prozessor 12 beispielsweise ausgebildet sein, das Video- oder Steuersignal zu erzeugen, so dass an Stelle der Mehrzahl von dreidimensional dargestellten Anzeigeschichten eine zweidimensional dargestellte Anzeigeschicht auf dem mehrschichtigen Anzeigenbereich 30 dargestellt wird, welche beispielsweise Navigationsinformation 1002 umfasst, wie beispielsweise in Fig. 10 dargestellt. Die zweidimensional dargestellte Anzeigeschicht kann beispielsweise ferner Information über Punkte von Interesse 1004 und Zusatzinformation 1006 umfassen. Nach Auswahl des Menüpunkts Hauptmenü 1008 kann der Prozessor 12 beispielsweise ausgebildet sein, das Video- oder Steuersignal zu erzeugen, so dass an Stelle der Mehrzahl von dreidimensional dargestellten Anzeigeschichten das Hauptmenü, wie in Fig. 11 gezeigt dargestellt ist. Das Hauptmenü kann beispielsweise Wetterinformation 1102, Information über das Fahrzeug 1104 und Zugriff auf die Navigationsfunktion 1106 umfassen.

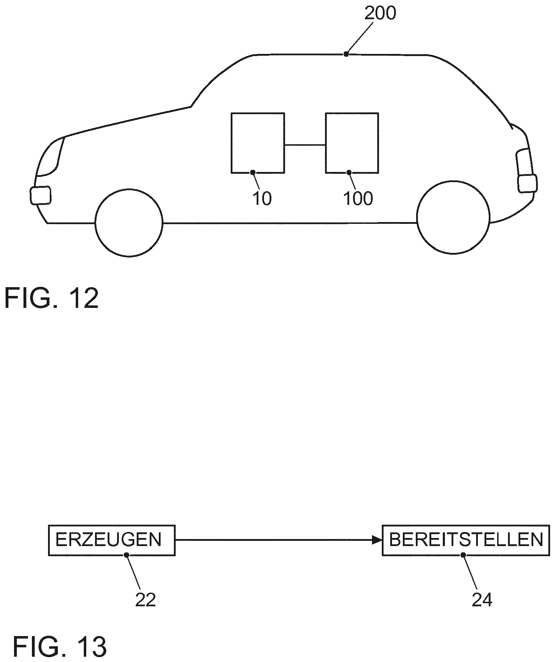

Fig. 12 illustriert ein Blockdiagramm eines Ausführungsbeispiels eines Fahrzeugs 200, das das Informationswiedergabesystem 10 gemäß einem der vorhergehenden Ansprüche und die Anzeigeeinrichtung 100 aufweist. In zumindest manchen Ausführungsbeispielen kann das Fahrzeug beispielsweise einem Landfahrzeug, einem Wasserfahrzeug, einem Luftfahrzeug, einem Schienenfahrzeug, einem Straßenfahrzeug, einem Auto, einem Geländefahrzeug, einem Kraftfahrzeug, oder einem Lastkraftfahrzeug entsprechen.

Fig. 13 illustriert ein Flussdiagramm eines Ausführungsbeispiels eines Verfahrens zum Wiedergeben von Information. Das Verfahren umfasst Erzeugen 22 eines Video- oder Steuersignal, sodass ein aus der Sicht eines Benutzers mehrschichtiger Anzeigebereich 30 durch eine Anzeigeeinrichtung 100 wiedergebbar ist. Der mehrschichtige Anzeigenbereich 30 umfasst eine Mehrzahl von dreidimensional dargestellten Anzeigeschichten. Unterschiedliche Anzeigeschichten der Mehrzahl von dreidimensional dargestellten Anzeigeschichten stellen unterschiedliche Informationen für den Benutzer bereit. Das Verfahren umfasst ferner Bereitstellen 24 des Video- oder Steuersignals der Anzeigeeinrichtung 100.

Ein weiteres Ausführungsbeispiel ist ein Computerprogramm zur Durchführung zumindest eines der oben beschriebenen Verfahren, wenn das Computerprogramm auf einem Computer, einem Prozessor oder einer programmierbaren Hardwarekomponente abläuft. Ein weiteres Ausführungsbeispiele ist auch ein digitales Speichermedium, das maschinen- oder computerlesbar ist, und das elektronisch lesbare Steuersignale aufweist, die mit einer programmierbaren Hardwarekomponente so zusammenwirken können, dass eines der oben beschriebenen Verfahren ausgeführt wird.

Die in der vorstehenden Beschreibung, den nachfolgenden Ansprüchen und den beigefügten Figuren offenbarten Merkmale können sowohl einzeln wie auch in beliebiger Kombination für die Verwirklichung eines Ausführungsbeispiels in ihren verschiedenen Ausgestaltungen von Bedeutung sein und implementiert werden.

Obwohl manche Aspekte im Zusammenhang mit einer Vorrichtung beschrieben wurden, versteht es sich, dass diese Aspekte auch eine Beschreibung des entsprechenden Verfahrens darstellen, sodass ein Block oder ein Bauelement einer Vorrichtung auch als ein entsprechender Verfahrensschritt oder als ein Merkmal eines Verfahrensschrittes zu verstehen ist. Analog dazu stellen Aspekte, die im Zusammenhang mit einem oder als ein Verfahrensschritt beschrieben wurden, auch eine Beschreibung eines entsprechenden Blocks oder Details oder Merkmals einer entsprechenden Vorrichtung dar.

Je nach bestimmten Implementierungsanforderungen können Ausführungsbeispiele der Erfindung in Hardware oder in Software implementiert sein. Die Implementierung kann unter Verwendung eines digitalen Speichermediums, beispielsweise einer Floppy-Disk, einer DVD, einer Blu-Ray Disc, einer CD, eines ROM, eines PROM, eines EPROM, eines EEPROM oder eines FLASH-Speichers, einer Festplatte oder eines anderen magnetischen oder optischen Speichers durchgeführt werden, auf dem elektronisch lesbare Steuersignale gespeichert sind, die mit einer programmierbaren Hardwarekomponente derart zusammenwirken können oder zusammenwirken, dass das jeweilige Verfahren durchgeführt wird.

Eine programmierbare Hardwarekomponente kann durch einen Prozessor, einen Computerprozessor (CPU = Central Processing Unit), einen Grafikprozessor (GPU = Graphics Processing Unit), einen Computer, ein Computersystem, einen anwendungsspezifischen integrierten Schaltkreis (ASIC = Application-Specific Integrated Circuit), einen integrierten Schaltkreis (IC = Integrated Circuit), ein Ein-Chip-System (SOC = System on Chip), ein programmierbares Logikelement oder ein feldprogrammierbares Gatterarray mit einem Mikroprozessor (FPGA = Field Programmable Gate Array) gebildet sein.

Das digitale Speichermedium kann daher maschinen- oder computerlesbar sein. Manche Ausführungsbeispiele umfassen also einen Datenträger, der elektronisch lesbare Steuersignale aufweist, die in der Lage sind, mit einem programmierbaren Computersystem oder einer programmierbare Hardwarekomponente derart zusammenzuwirken, dass eines der hierin beschriebenen Verfahren durchgeführt wird. Ein Ausführungsbeispiel ist somit ein Datenträger (oder ein digitales Speichermedium oder ein computerlesbares Medium), auf dem das Programm zum Durchführen eines der hierin beschriebenen Verfahren aufgezeichnet ist.

Allgemein können Ausführungsbeispiele der vorliegenden Erfindung als Programm, Firm-ware, Computerprogramm oder Computerprogrammprodukt mit einem Programmcode oder als Daten implementiert sein, wobei der Programmcode oder die Daten dahin gehend wirk-sam ist bzw. sind, eines der Verfahren durchzuführen, wenn das Programm auf einem Prozessor oder einer programmierbaren Hardwarekomponente abläuft. Der Programmcode oder die Daten kann bzw. können beispielsweise auch auf einem maschinenlesbaren Träger oder Datenträger gespeichert sein. Der Programmcode oder die Daten können unter anderem als Quellcode, Maschinencode oder Bytecode sowie als anderer Zwischencode vorliegen.

Ein weiteres Ausführungsbeispiel ist ferner ein Datenstrom, eine Signalfolge oder eine Sequenz von Signalen, der bzw. die das Programm zum Durchführen eines der hierin beschriebenen Verfahren darstellt bzw. darstellen. Der Datenstrom, die Signalfolge oder die Sequenz von Signalen kann bzw. können beispielsweise dahin gehend konfiguriert sein, um über eine Datenkommunikationsverbindung, beispielsweise über das Internet oder ein anderes Netzwerk, transferiert zu werden. Ausführungsbeispiele sind so auch Daten repräsentierende Signalfolgen, die für eine Übersendung über ein Netzwerk oder eine Datenkommunikationsverbindung geeignet sind, wobei die Daten das Programm darstellen.

Ein Programm gemäß einem Ausführungsbeispiel kann eines der Verfahren während seiner Durchführung beispielsweise dadurch umsetzen, dass dieses Speicherstellen ausliest oder in diese ein Datum oder mehrere Daten hinein schreibt, wodurch gegebenenfalls Schaltvorgänge oder andere Vorgänge in Transistorstrukturen, in Verstärkerstrukturen oder in anderen elektrischen, optischen, magnetischen oder nach einem anderen Funktionsprinzip arbeiten-den Bauteile hervorgerufen werden. Entsprechend können durch ein Auslesen einer Speicherstelle Daten, Werte, Sensorwerte oder andere Informationen von einem Programm erfasst, bestimmt oder gemessen werden. Ein Programm kann daher durch ein Auslesen von einer oder mehreren Speicherstellen Größen, Werte, Messgrößen und andere Informationen erfassen, bestimmen oder messen, sowie durch ein Schreiben in eine oder mehrere Speicherstellen eine Aktion bewirken, veranlassen oder durchführen sowie andere Geräte, Maschinen und Komponenten ansteuern.

Die oben beschriebenen Ausführungsbeispiele stellen lediglich eine Veranschaulichung der Prinzipien der vorliegenden Erfindung dar. Es versteht sich, dass Modifikationen und Variationen der hierin beschriebenen Anordnungen und Einzelheiten anderen Fachleuten einleuchten werden. Deshalb ist beabsichtigt, dass die Erfindung lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

### Bezugszeichenliste

- 10: Informationswiedergabesystem
- 12: Prozessor
- 14: Ausgangsschnittstelle
- 16: Eingangsschnittstelle
- 18: Datenspeicher
- 22: Erzeugen
- 24: Bereitstellen
- 30: Mehrschichtiger Anzeigebereich
- 30a: Anzeigeschicht Kartenmaterial
- 30b: Anzeigeschicht topographische Ansicht
- 30c: Anzeigeschicht Punkte von Interesse
- 100: Anzeigeeinrichtung
- 200: Fahrzeug
- 1002: Navigationsinformation
- 1004: Punkte von Interesse
- 1006: Zusatzinformation
- 1008: Bedienelement Hauptmenü
- 2002: Punkte von Interesse
- 2002a: Zusatzinformation
- 2002b: Distanzinformation zu den Punkten von Interesse
- 2004: Wetterinformation
- 2006: Bedienelemente zum Konfigurieren der Anzeigeebenen
- 2008: Bedienelement Starten einer Navigation
- 2010: Bedienelement zur Auswahl des Hauptmenüs
- 4000: Kartenmaterial
- 4002: Punkte von Interesse
- 4002a: Zusatzinformation
- 4004: Bedienelemente zum Konfigurieren der Anzeigeebenen
- 5002: Punkte von Interesse
- 5002a: Zusatzinformation
- 5002b: Distanzinformation zu den Punkten von Interesse
- 6002: Fahrzeug
- 6002a: Zusatzinformation
- 6002b: Weitere Information
- 7002: Bedienelement
- 8002: Auswahl einer Karte
- 8004: Karte basierend auf einer Satellitenaufnahme
- 9002: Bedienelement Starten einer Navigation

## Patentansprüche

1. Informationswiedergabesystem zur Wiedergabe von Navigationsinformationen (10), mit folgenden Merkmalen:
einem Prozessor (12), der ausgebildet ist, um ein Video- oder Steuersignal zu erzeugen,
sodass ein aus der Sicht eines Benutzers mehrschichtiger Anzeigebereich (30) durch eine Anzeigeeinrichtung (100) wiedergebbar ist,
wobei der mehrschichtige Anzeigenbereich (30) eine Mehrzahl von dreidimensional dargestellten Anzeigeschichten umfasst, wobei unterschiedliche Anzeigeschichten der Mehrzahl von dreidimensional dargestellten Anzeigeschichten unterschiedliche Informationen für den Benutzer bereitstellen, wobei die unterschiedlichen Informationen in unterschiedlichen Gruppen von Informationen umfasst sind, wobei unterschiedliche Anzeigeschichten Informationen aus unterschiedlichen Gruppen für den Benutzer bereitstellen,
einer Ausgangseinrichtung (14), die ausgebildet ist, um das Video- oder Steuersignal der Anzeigeeinrichtung (100) bereitzustellen,
wobei die Gruppen Routeninformation, Straßeninformation, Information über Bauwerke, Information über Topographie, Information über Natur und Information über Punkte von Interesse umfassen, und
wobei die unterschiedlichen Informationen einen Zusammenhang aufweisen.

2. Das Informationswiedergabesystem (10) gemäß Anspruch 1, wobei die dreidimensional dargestellten Anzeigeschichten der Mehrzahl von dreidimensional dargestellten Anzeigeschichten im Wesentlichen durch parallel zueinander und übereinander angeordnete Anzeigeebenen dargestellt werden.

3. Das Informationswiedergabesystem (10) gemäß einem der vorhergehenden Ansprüche, wobei sich die dreidimensional dargestellten Anzeigeschichten der Mehrzahl von dreidimensional dargestellten Anzeigeschichten zumindest teilweise überlagern.

4. Das Informationswiedergabesystem (10) gemäß einem der vorhergehenden Ansprüche, wobei sich die dreidimensional dargestellten Anzeigeschichten jeweils über mehr als die Hälfte einer Breite der Anzeigeeinrichtung (100) erstrecken.

5. Das Informationswiedergabesystem (10) gemäß einem der vorhergehenden Ansprüche, wobei benachbarte dreidimensional dargestellten Anzeigeschichten der Mehrzahl von dreidimensional dargestellten Anzeigeschichten einen vertikalen Abstand von weniger als 1/3 einer Höhe der Anzeigeeinrichtung (100) und mehr als 1/20 der Höhe der Anzeigeeinrichtung (100) zueinander haben.

6. Das Informationswiedergabesystem (10) gemäß einem der vorhergehenden Ansprüche, wobei eine dreidimensional dargestellte Anzeigeschicht der Mehrzahl von dreidimensional dargestellten Anzeigeschichten einer Darstellung aus einem Blickwinkel zwischen 10° und 80° über einer Ebene entspricht.

7. Das Informationswiedergabesystem (10) gemäß einem der vorhergehenden Ansprüche ferner umfassend eine Eingangsschnittstelle (16), wobei die Eingangsschnittstelle (16) ausgebildet ist, um ein Eingabesignal zu empfangen, wobei das Eingabesignal Information über eine Position einer Berührung der Anzeigeeinrichtung (100), Annäherung zu der Anzeigeeinrichtung (100) oder eine Eingabe über eine Eingabeeinrichtung umfasst,
wobei der Prozessor (12) ausgebildet ist, um basierend auf dem Eingabesignal eine Auswahl bezüglich des mehrschichtigen Anzeigenbereichs (30) zu erfassen.

8. Das Informationswiedergabesystem (10) gemäß Anspruch 7,
wobei der Prozessor (12) ausgebildet ist, um die Reihenfolge der Anzeigeschichten des mehrschichtigen Anzeigenbereichs (30) basierend auf der erfassten Auswahl zu bestimmen.

9. Das Informationswiedergabesystem (10) gemäß Anspruch 7 oder 8,
wobei der Prozessor (12) ausgebildet ist, um eine Anzeigeeigenschaft einer ausgewählten Anzeigeschicht des mehrschichtigen Anzeigenbereichs (30) basierend auf der erfassten Auswahl zu ändern.

10. Das Informationswiedergabesystem (10) gemäß Anspruch 9,
wobei die ausgewählte Anzeigeschicht der in der dreidimensionalen Darstellung vom Benutzer aus gesehen obersten Anzeigeschicht entspricht.

11. Das Informationswiedergabesystem (10) gemäß Anspruch 7, 8, 9 oder 10,
wobei der Prozessor (12) ausgebildet ist, das Video- oder Steuersignal zu erzeugen, so dass an Stelle der Mehrzahl von dreidimensional dargestellten Anzeigeschichten eine zweidimensional dargestellte Anzeigeschicht auf dem mehrschichtigen Anzeigenbereich (30) dargestellt wird, wobei die zweidimensional dargestellte Anzeigeschicht zumindest einer dreidimensional dargestellten Anzeigeschicht der Mehrzahl von dreidimensional dargestellten Anzeigeschichten entspricht.

12. Das Informationswiedergabesystem (10) gemäß einem der Ansprüche 7 bis 11,
wobei der Prozessor (12) ausgebildet ist, um basierend auf dem Eingabesignal eine Bewegung relativ zum mehrschichtigen Anzeigenbereich (30) zu bestimmen,
wobei der Prozessor (12) ausgebildet ist, um die Reihenfolge der Anzeigeschichten des mehrschichtigen Anzeigenbereichs (30) basierend auf der detektierten Bewegung zu bestimmen oder um Anzeigeeigenschaften einer ausgewählten Anzeigeschicht des mehrschichtigen Anzeigenbereichs (30) basierend auf der detektierten Bewegung zu bestimmen.

13. Das Informationswiedergabesystem (10) gemäß einem der vorhergehenden Ansprüche, wobei eine der dreidimensional angezeigten Anzeigeschichten eine Topographie des Gebiets relativ zu einem Fahrzeug darstellt, wobei eine der dreidimensional dargestellten Anzeigeschichten eine von schräg oben dargestellte zweidimensionale Karte in einer Umgebung des Fahrzeugs darstellt, wobei zumindest eine der dreidimensional dargestellten Anzeigeschichten eine Karte mit individuell auswählbaren Punkten in einer Umgebung des Fahrzeugs darstellt, oder wobei zumindest eine der dreidimensional angezeigten Anzeigeschichten Darstellungen von unterschiedlichen Navigationsinformationen umfasst.

14. Das Informationswiedergabesystem (10) gemäß einem der vorhergehenden Ansprüche ferner umfassend eine Eingangsschnittstelle (16), wobei die Eingangsschnittstelle (16) ausgebildet ist, um ein Lokalisierungssignal von einem Lokalisierungsmodul zu empfangen, wobei das Lokalisierungssignal Information über eine Position des Lokalisierungsmoduls umfasst,
wobei der Prozessor (12) ausgebildet ist, das Video- oder Steuersignal zu erzeugen, so dass eine dreidimensionale Anzeigeschicht der Mehrzahl von dreidimensional dargestellten Anzeigeschichten die Position des Lokalisierungsmoduls basierend auf dem Lokalisierungssignal darstellt.

15. Das Informationswiedergabesystem (10) gemäß Anspruch 14,
wobei die Eingangsschnittstelle ausgebildet ist, ein Standortinformationssignal zu erhalten, und wobei der Prozessor (12) ausgebildet ist, das Video- oder Steuersignal zu erzeugen, so dass auf zumindest einer Anzeigeschicht der Mehrzahl von dreidimensional dargestellten Anzeigeschichten Standortinformation basierend auf der Information über die Position und basierend auf dem Standortinformationssignal dargestellt wird.

16. Das Informationswiedergabesystem (10) gemäß Anspruch 15 ferner umfassend einen Datenspeicher (18), der ausgebildet ist, um das Standortinformationssignal der Eingangsschnittstelle (16) bereitzustellen.

17. Das Informationswiedergabesystem (10) gemäß Anspruch 16,
wobei die Standortinformation Karteninformation und Zusatzinformation umfasst, wobei der Prozessor (12) ausgebildet ist, auf zumindest einer Anzeigeschicht der Mehrzahl von dreidimensional dargestellten Anzeigeschichten Karteninformation bereitzustellen und auf zumindest einer weiteren Anzeigeschicht der Mehrzahl von dreidimensional dargestellten Anzeigeschichten Zusatzinformation bereitzustellen.

18. Fahrzeug (200), das das Informationswiedergabesystem (10) gemäß einem der vorhergehenden Ansprüche und die Anzeigeeinrichtung (100) aufweist.

19. Verfahren zum Wiedergeben von Navigationsinformationen mit folgenden Merkmalen:
Erzeugen (22) eines Video- oder Steuersignal, sodass ein aus der Sicht eines Benutzers mehrschichtiger Anzeigebereich (30) durch eine Anzeigeeinrichtung (100) wiedergebbar ist,
wobei der mehrschichtige Anzeigenbereich (30) eine Mehrzahl von dreidimensional dargestellten Anzeigeschichten umfasst, wobei unterschiedliche Anzeigeschichten der Mehrzahl von dreidimensional dargestellten Anzeigeschichten unterschiedliche Informationen für den Benutzer bereitstellen, wobei die unterschiedlichen Informationen in unterschiedlichen Gruppen von Informationen umfasst sind, wobei unterschiedliche Anzeigeschichten Informationen
aus unterschiedlichen Gruppen für den Benutzer bereitstellen, Bereitstellen (24) des Video- oder Steuersignals der Anzeigeeinrichtung (100),
wobei die Gruppen Routeninformation, Straßeninformation, Information über Bauwerke, Information über Topographie, Information über Natur und Information über Punkte von Interesse umfassen, und
wobei die unterschiedlichen Informationen einen Zusammenhang aufweisen.

20. Programm mit einem Programmcode zum Durchführen des Verfahrens nach Anspruch 19 wenn der Programmcode auf einem Computer, einem Prozessor, einem Kontrollmodul oder einer programmierbaren Hardwarekomponente ausgeführt wird.

## Claims

1. Information reproduction system for reproducing navigation information (10), having the following features:
a processor (12) designed to generate a video or control signal so that a display area (30) that is multilayered from the point of view of a user can be reproduced by a display device (100),
wherein the multilayered display area (30) comprises a plurality of three-dimensionally presented display layers, different display layers of the plurality of three-dimensionally presented display layers providing different information for the user, the different information being included in different groups of information, with different display layers providing information from different groups for the user,
an output device (14) designed to provide the video or control signal to the display device (100),
wherein the groups include route information, road information, information about roadworks, information about topography, information about nature and information about points of interest, and wherein the different information is related.

2. Information reproduction system (10) according to Claim 1,
wherein the three-dimensionally presented display layers of the plurality of three-dimensionally presented display layers are presented essentially by display levels that are arranged parallel to one another and above one another.

3. Information reproduction system (10) according to either of the preceding claims,
wherein the three-dimensionally presented display layers of the plurality of three-dimensionally presented display layers overlap at least in part.

4. Information reproduction system (10) according to one of the preceding claims,
wherein the three-dimensionally presented display layers each extend over more than half of a width of the display device (100).

5. Information reproduction system (10) according to one of the preceding claims,
wherein adjacent three-dimensionally presented display layers of the plurality of three-dimensionally presented display layers are at a vertical distance of less than 1/3 of a height of the display device (100) and more than 1/20 of the height of the display device (100) from one another.

6. Information reproduction system (10) according to one of the preceding claims,
wherein a three-dimensionally presented display layer of the plurality of three-dimensionally presented display layers corresponds to a presentation from a viewing angle of between 10° and 80° above a level.

7. Information reproduction system (10) according to one of the preceding claims,
further comprising an input interface (16), wherein the input interface (16) is designed to receive an input signal, the input signal comprising information about a position of a touch on the display device (100), approach toward the display device (100) or an input using an input device,
wherein the processor (12) is designed to take the input signal as a basis for capturing a selection regarding the multilayered display area (30).

8. Information reproduction system (10) according to Claim 7,
wherein the processor (12) is designed to determine the order of the display layers of the multilayered display area (30) on the basis of the captured selection.

9. Information reproduction system (10) according to Claim 7 or 8,
wherein the processor (12) is designed to change a display property of a selected display layer of the multilayered display area (30) on the basis of the captured selection.

10. Information reproduction system (10) according to Claim 9,
wherein the selected display layer corresponds to the topmost display layer in the three-dimensional presentation as seen from the user.

11. Information reproduction system (10) according to Claim 7, 8, 9 or 10,
wherein the processor (12) is designed to generate the video or control signal so that a two-dimensionally presented display layer is presented on the multilayered display area (30) instead of the plurality of three-dimensionally presented display layers, the two-dimensionally presented display layer corresponding to at least one three-dimensionally presented display layer of the plurality of three-dimensionally presented display layers.

12. Information reproduction system (10) according to one of Claims 7 to 11,
wherein the processor (12) is designed to take the input signal as a basis for determining a motion relative to the multilayered display area (30),
wherein the processor (12) is designed to determine the order of the display layers of the multilayered display area (30) on the basis of the detected motion or to determine display properties of a selected display layer of the multilayered display area (30) on the basis of the detected motion.

13. Information reproduction system (10) according to one of the preceding claims,
wherein one of the three-dimensionally displayed display layers presents a topography of the region relative to a vehicle, wherein one of the three-dimensionally presented display layers presents a twodimensional map, presented from diagonally above, in surroundings of the vehicle, wherein at least one of the three-dimensionally presented display layers presents a map containing individually selectable points in surroundings of the vehicle, or wherein at least one of the three-dimensionally displayed display layers comprises presentations of different navigation information.

14. Information reproduction system (10) according to one of the preceding claims,
further comprising an input interface (16), the input interface (16) being designed to receive a location signal from a locating module, the location signal comprising information about a position of the locating module,
wherein the processor (12) is designed to generate the video or control signal so that a three-dimensional display layer of the plurality of three-dimensionally presented display layers presents the position of the locating module on the basis of the location signal.

15. Information reproduction system (10) according to Claim 14,
wherein the input interface is designed to get a location information signal, and wherein the processor (12) is designed to generate the video or control signal so that location information is presented on at least one display layer of the plurality of three-dimensionally presented display layers on the basis of the information about the position and on the basis of the location information signal.

16. Information reproduction system (10) according to Claim 15,
further comprising a data memory (18) designed to provide the location information signal to the input interface (16).

17. Information reproduction system (10) according to Claim 16,
wherein the location information comprises map information and additional information, the processor (12) being designed to provide map information on at least one display layer of the plurality of three-dimensionally presented display layers and to provide additional information on at least one further display layer of the plurality of three-dimensionally presented display layers.

18. Vehicle (200) comprising the information reproduction system (10) according to one of the preceding claims and the display device (100).

19. Method for reproducing navigation information, having the following features:
generating (22) a video or control signal so that a display area (30) that is multilayered from the point of view of a user can be reproduced by a display device (100),
wherein the multilayered display area (30) comprises a plurality of three-dimensionally presented display layers, different display layers of the plurality of three-dimensionally presented display layers providing different information for the user, the different information being included in different groups of information, with different display layers providing information from different groups for the user,
providing (24) the video or control signal to the display device (100),
wherein the groups include route information, road information, information about roadworks, information about topography, information about nature and information about points of interest, and wherein the different information is related.

20. Program having a program code for carrying out the method according to Claim 19 when the program code is executed on a computer, a processor, a control module or a programmable hardware component.

## Revendications

1. Système de reproduction d'informations permettant de reproduire des informations de navigation (10), comprenant les particularités suivantes :
un processeur (12) qui est réalisé pour produire un signal vidéo ou de commande de sorte qu'une zone d'affichage à plusieurs couches (30), vue par un utilisateur, peut être reproduite par un dispositif d'affichage (100),
dans lequel la zone d'affichage à plusieurs couches (30) comprend une pluralité de couches d'affichage représentées en trois dimensions, dans lequel différentes couches d'affichage de la pluralité de couches d'affichage représentées en trois dimensions fournissent différentes informations à l'utilisateur, dans lequel les différentes informations sont comprises dans différents groupes d'informations, dans lequel différentes couches d'affichage fournissent des informations issues de différents groupes à l'utilisateur,
un dispositif de sortie (14) qui est réalisé pour fournir le signal vidéo ou de commande au dispositif d'affichage (100),
dans lequel les groupes comprennent des informations d'itinéraire, des informations de route, des informations concernant des bâtiments, des informations concernant la topographie, des informations concernant la nature et des informations concernant des points d'intérêt, et dans lequel il existe un lien entre les différentes informations.

2. Système de reproduction d'informations (10) selon la revendication 1, dans lequel les couches d'affichage représentées en trois dimensions de la pluralité de couches d'affichage représentées en trois dimensions sont représentées substantiellement par des plans d'affichage disposés en parallèle les uns aux autres et les uns au-dessus des autres.

3. Système de reproduction d'informations (10) selon l'une quelconque des revendications précédentes, dans lequel les couches d'affichage représentées en trois dimensions de la pluralité de couches d'affichage représentées en trois dimensions se recouvrent au moins partiellement.

4. Système de reproduction d'informations (10) selon l'une quelconque des revendications précédentes, dans lequel les couches d'affichage représentées en trois dimensions s'étendent respectivement sur plus de la moitié d'une largeur du dispositif d'affichage (100).

5. Système de reproduction d'informations (10) selon l'une quelconque des revendications précédentes, dans lequel des couches d'affichage voisines, représentées en trois dimensions, de la pluralité de couches d'affichage en trois dimensions présentent une distance verticale de moins de 1/3 d'une hauteur du dispositif d'affichage (100) et de plus de 1/20 de la hauteur du dispositif d'affichage (100) les unes par rapport aux autres.

6. Système de reproduction d'informations (10) selon l'une quelconque des revendications précédentes, dans lequel une couche d'affichage représentée en trois dimensions de la pluralité de couches d'affichage représentées en trois dimensions correspond à une représentation selon un angle de visée compris entre 10° et 80° sur un plan.

7. Système de reproduction d'informations (10) selon l'une quelconque des revendications précédentes, comprenant en outre une interface d'entrée (16), dans lequel l'interface d'entrée (16) est réalisée pour recevoir un signal d'entrée, dans lequel le signal d'entrée comprend des informations concernant une position d'un contact avec le dispositif d'affichage (100), une approche du dispositif d'affichage (100) ou une entrée par l'intermédiaire du dispositif d'entrée,
dans lequel le processeur (12) est réalisé pour acquérir sur la base du signal d'entrée une sélection concernant la zone d'affichage à plusieurs couches (30) .

8. Système de reproduction d'informations (10) selon la revendication 7, dans lequel le processeur (12) est réalisé pour déterminer l'ordre des couches d'affichage de la zone d'affichage à plusieurs couches (30) sur la base de la sélection acquise.

9. Système de reproduction d'informations (10) selon la revendication 7 ou 8, dans lequel le processeur (12) est réalisé pour modifier une propriété d'affichage d'une couche d'affichage sélectionnée de la zone d'affichage à plusieurs couches (30) sur la base de la sélection acquise.

10. Système de reproduction d'informations (10) selon la revendication 9, dans lequel la couche d'affichage sélectionnée correspond à la couche d'affichage la plus haute sur la représentation en trois dimensions, vue par l'utilisateur.

11. Système de reproduction d'informations (10) selon la revendication 7, 8, 9 ou 10, dans lequel le processeur (12) est réalisé pour produire le signal vidéo ou de commande de telle sorte qu'au lieu de la pluralité de couches d'affichage représentées en trois dimensions, une couche d'affichage représentée en deux dimensions est représentée sur la zone d'affichage à plusieurs couches (30), dans lequel la couche d'affichage représentée en deux dimensions correspond à au moins une couche d'affichage représentée en trois dimensions de la pluralité de couches d'affichage représentées en trois dimensions.

12. Système de reproduction d'informations (10) selon l'une quelconque des revendications 7 à 11, dans lequel le processeur (12) est réalisé pour déterminer sur la base du signal d'entrée un mouvement par rapport à la zone d'affichage à plusieurs couches (30),
dans lequel le processeur (12) est réalisé pour déterminer l'ordre des couches d'affichage de la zone d'affichage à plusieurs couches (30) sur la base du mouvement détecté, ou pour déterminer des propriétés d'affichage d'une couche d'affichage sélectionnée de la zone d'affichage à plusieurs couches (30) sur la base du mouvement détecté.

13. Système de reproduction d'informations (10) selon l'une quelconque des revendications précédentes, dans lequel l'une des couches d'affichage affichées en trois dimensions représente la topographie de la région par rapport à un véhicule, dans lequel l'une des couches d'affichage représentées en trois dimensions représente une carte en deux dimensions d'un environnement du véhicule, représentée d'en haut en biais, dans lequel au moins l'une des couches d'affichage représentées en trois dimensions représente une carte pourvue de points sélectionnables individuellement dans un environnement du véhicule, ou dans lequel au moins l'une des couches d'affichage affichées en trois dimensions comprend des représentations de différentes informations de navigation.

14. Système de reproduction d'informations (10) selon l'une quelconque des revendications précédentes, comprenant en outre une interface d'entrée (16), dans lequel l'interface d'entrée (16) est réalisée pour recevoir un signal de localisation d'un module de localisation, dans lequel le signal de localisation comprend des informations concernant une position du module de localisation,
dans lequel le processeur (12) est réalisé pour produire le signal vidéo ou de commande de telle sorte qu'une couche d'affichage en trois dimensions de la pluralité de couches d'affichage représentées en trois dimensions représente la position du module de localisation sur la base du signal de localisation.

15. Système de reproduction d'informations (10) selon la revendication 14, dans lequel l'interface d'entrée est réalisée pour obtenir un signal d'informations de lieu, et dans lequel le processeur (12) est réalisé pour produire le signal vidéo ou de commande de telle sorte que sur au moins une couche d'affichage de la pluralité de couches d'affichage représentées en trois dimensions des informations de lieu sur la base des informations concernant la position et sur la base du signal d'informations de lieu sont représentées.

16. Système de reproduction d'informations (10) selon la revendication 15, comprenant en outre une mémoire de données (18) qui est réalisée pour fournir le signal d'informations de lieu à l'interface d'entrée (16).

17. Système de reproduction d'informations (10) selon la revendication 16, dans lequel les informations de lieu comprennent des informations cartographiques et des informations supplémentaires, dans lequel le processeur (12) est réalisé pour fournir des informations cartographiques sur au moins une couche d'affichage de la pluralité de couches d'affichage représentées en trois dimensions, et pour fournir des informations supplémentaires sur au moins une autre couche d'affichage de la pluralité de couches d'affichage représentées en trois dimensions.

18. Véhicule (200) qui présente le système de reproduction d'informations (10) selon l'une quelconque des revendications précédentes et le dispositif d'affichage (100).

19. Procédé permettant de reproduire des informations de navigation, comprenant les particularités suivantes :
produire (22) un signal vidéo ou de commande de sorte qu'une zone d'affichage à plusieurs couches (30), vue par un utilisateur, peut être reproduite par un dispositif d'affichage (100),
dans lequel la zone d'affichage à plusieurs couches (30) comprend une pluralité de couches d'affichage représentées en trois dimensions, dans lequel différentes couches d'affichage de la pluralité de couches d'affichage représentées en trois dimensions fournissent différentes informations à l'utilisateur, dans lequel les différentes informations sont comprises dans différents groupes d'informations, dans lequel différentes couches d'affichage fournissent des informations issues de différents groupes à l'utilisateur,
fournir (24) le signal vidéo ou de commande au dispositif d'affichage (100), dans lequel les groupes comprennent des informations d'itinéraire, des informations de route, des informations concernant des bâtiments, des informations concernant la topographie, des informations concernant la nature et des informations concernant des points d'intérêt, et dans lequel il existe un lien entre les différentes informations.

20. Programme comprenant du code programme pour exécuter le procédé selon la revendication 19 lorsque le code programme est exécuté sur un ordinateur, un processeur, un module de contrôle ou un composant matériel programmable.
